# EUROPEAN PATENT APPLICATION

(11) **EP 4 607 453 A2**
(43) Date of publication of application: **27.08.2025**
(21) Application number: 25171537.1
(22) Date of filing: 21.04.2025
(51) Int. Cl.: G06T 5/73, G06T 5/80, G06T 5/50, G06T 5/60, G06T 7/60

(54) **MEASUREMENT CHARGE REMOVAL AND PER-LAYER STACK GEOMETRY INFERENCE USING DIFFUSION MODELS**

(71) Applicant: ASML Netherlands B.V., 5500 AH Veldhoven (NL)
(72) Inventor: BOTARI, Tiago, 5500 AH Veldhoven (NL); VENSELAAR, Joannes, Jitse, 5500 AH Veldhoven (NL); ONOSE, Alexandru, 5500 AH Veldhoven (NL); KRIEGER, Annika Meike, 5500 AH Veldhoven (NL); SOARES DUARTE, Alex, 5500 AH Veldhoven (NL); PISARENCO, Maxim, 5500 AH Veldhoven (NL)
(74) Representative: ASML Netherlands B.V.

(57) **Abstract**

A method of updating images taken by charged-particle beam (CPB) tool of a feature of a wafer. The method includes generating a distortion map by a machine learning model trained on: a first CPB image of the feature, wherein the first image has a first resolution; a second CPB image of the feature, wherein the second image has a second resolution different from the first resolution and the second CPB image includes distortions; and a mask based on the first CPB image. The distortion map indicates how the second CPB image is distorted relative to the feature. A third image of the feature is generated by applying the distortion map to the second CPB image, wherein the third image has a third resolution higher than the first resolution and is used for performing metrology or defect detection.

## Description

### TECHNICAL FIELD

The embodiments provided herein relate to removing the effect of charge imparted while taking an image, and more particularly to using a machine learning diffusion model to reduce image distortion caused by charge imparted when taking a charged-particle beam inspection image for use in metrology and defect inspection.

### BACKGROUND

Using electrons to obtain an image (e.g., a charged-particle beam image) can present challenges, such as charge buildup in the structures being measured. Charge accumulation on the measured sample can lead to degradation of the produced images and are known to introduce different types of artifacts at multiple length scales, such as distortions, uneven brightness, and image blurring.

The manufacturing of integrated circuits is performed layer-by-layer, where the necessary patterns are produced over the previous layers. Metrology and inspections can be performed on each layer to guarantee the needed quality of the printed patterns. Inspections can include defect detection, such as if the layers are stacked as the intended design. If the layers are not stacked as intended, this may lead to edge placement error (EPE) and overlay (OV) errors between two consecutive layers. Using high-energy tools to take an image of a top layer may cause an image of a lower layer (e.g., a layer beneath the top layer) to "bleed through" into the top layer image, thereby mixing the information content of the top layer image with that of the lower layer.

### SUMMARY

Some embodiments provide a method of updating images taken by charged-particle beam (CPB) tool of a feature of a wafer. The method includes generating a distortion map by a machine learning model trained on: a first CPB image of the feature, wherein the first image has a first resolution; a second CPB image of the feature, wherein the second image has a second resolution different from the first resolution and the second CPB image includes distortions; and a mask based on the first CPB image. The distortion map indicates how the second CPB image is distorted relative to the feature. A third image of the feature is generated by applying the distortion map to the second CPB image, wherein the third image has a third resolution higher than the first resolution and is used for performing metrology or defect detection.

Some embodiments provide a method of generating a single layer image from a charged-particle beam (CPB) image of a multilayer pattern of a wafer. The method includes generating a new first layer image and a new second layer image using a machine learning model trained on: a first CPB image of a first layer of the wafer before a second layer of the wafer is fabricated on top of the first layer, wherein the first image has a first resolution; a second CPB image of the second layer after the second layer is fabricated, wherein the second image has the first resolution; and a third CPB image of at least the first layer and the second layer, wherein the third image has a second resolution different from the first resolution. The new first layer image is used for performing metrology or defect detection.

Other advantages of the embodiments of the present disclosure will become apparent from the following description taken in conjunction with the accompanying drawings wherein are set forth, by way of illustration and example, certain embodiments of the present invention.

### BRIEF DESCRIPTION OF FIGURES

The above and other aspects of the present disclosure will become more apparent from the description of exemplary embodiments, taken in conjunction with the accompanying drawings.
**Fig. 1** is a schematic diagram illustrating an example charged-particle beam inspection (CPBI) system, consistent with embodiments of the present disclosure.
**Fig. 2** is a schematic diagram illustrating an example charged-particle beam tool, consistent with embodiments of the present disclosure that may be a part of the example charged-particle beam inspection system of **Fig. 1****.**
**Fig. 3** is a schematic diagram illustrating an example multi-beam tool, consistent with embodiments of the present disclosure that can be a part of the example charged-particle beam inspection system of **Fig. 1****.**
**Fig. 4** is a block diagram of an exemplary server, consistent with embodiments of the present disclosure.
**Fig. 5** is a schematic diagram illustrating an example neural network, consistent with embodiments of the present disclosure.
**Fig. 6** is a flow diagram of a process for image correction to remove charging effects, consistent with embodiments of the present disclosure.
**Fig. 7A** is a flow diagram of a process for generating data augmentation for an image using a style transfer model, consistent with embodiments of the present disclosure.
**Fig. 7B** is a flow diagram of another process for generating data augmentation for image using a style transfer model, consistent with embodiments of the present disclosure.
**Fig. 8** is a flow diagram of a process for training a deep learning model to predict deformation maps, consistent with embodiments of the present disclosure.
**Fig. 9** is a flow diagram of a process for training a diffusion model to predict deformation maps, consistent with embodiments of the present disclosure.
**Fig. 10** is a flow diagram of a process for correcting an image using a style adapter model, consistent with embodiments of the present disclosure.
**Fig. 11** is a flowchart of a method of correcting images taken by charged-particle beam (CPB) tool of a feature of a wafer, consistent with embodiments of the present disclosure.
**Fig. 12** shows examples of taking separate images of individual layers and taking a combined image of two consecutive layers, consistent with embodiments of the present disclosure.
**Fig. 13** shows examples of different images that may be obtained by adjusting scanning electron microscope settings, consistent with embodiments of the present disclosure.
**Fig. 14** is an overview of a neural network for disentangling input images, consistent with embodiments of the present disclosure.
**Fig. 15** is a flow diagram of a process for training a diffusion model to reconstruct a bottom layer from a high energy charged-particle beam (CPB) image, consistent with embodiments of the present disclosure.
**Fig. 16** is a flow diagram of a process for training a diffusion model to reconstruct a bottom layer and a top layer from a high energy CPB image, consistent with embodiments of the present disclosure.
**Fig. 17** is a flow diagram of a process for training a diffusion model to reconstruct a bottom layer from a high energy CPB image and considering bottom layer materials, consistent with embodiments of the present disclosure.
**Fig. 18** is a flowchart of a method of generating a single layer image from a charged-particle beam (CPB) image of a multilayer pattern of a wafer and using the single layer image for metrology or defect detection, consistent with embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations. Instead, they are merely examples of apparatuses and methods consistent with aspects related to the disclosed embodiments as recited in the appended claims. For example, although some embodiments are described in the context of utilizing electron beams, the disclosure is not so limited. Other types of charged-particle beams (e.g., including protons, ions, muons, or any other particle carrying electric charges) may be similarly applied. Furthermore, other imaging systems may be used, such as optical imaging, photon detection, x-ray detection, ion detection, etc.

Relative dimensions of components in drawings may be exaggerated for clarity. Within the following description of drawings, the same or like reference numbers refer to the same or like components or entities, and only the differences with respect to the individual embodiments are described. As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

Electronic devices are constructed of circuits formed on a piece of semiconductor material called a substrate. The semiconductor material may include, for example, silicon, gallium arsenide, indium phosphide, silicon germanium, or the like. Many circuits may be formed together on the same piece of silicon and are called integrated circuits or ICs. The size of these circuits has decreased dramatically so that many more of them can be fit on the substrate. For example, an IC chip in a smartphone can be as small as a thumbnail and yet may include over 2 billion transistors, the size of each transistor being less than 1/1000th the size of a human hair.

Making these ICs with extremely small structures or components is a complex, time-consuming, and expensive process, often involving hundreds of individual steps. Errors in even one step have the potential to result in defects in the finished IC, rendering it useless. Thus, one goal of the manufacturing process is to avoid such defects to maximize the number of functional ICs made in the process; that is, to improve the overall yield of the process.

One component of improving yield is monitoring the chip-making process to ensure that it is producing a sufficient number of functional integrated circuits. One way to monitor the process is to inspect the chip circuit structures at various stages of their formation. Inspection can be carried out using a scanning charged-particle microscope (SCPM). For example, an SCPM may be a scanning electron microscope (SEM). An SCPM can be used to image these extremely small structures, in effect, taking a "picture" of the structures of the wafer. The image can be used to determine if the structure was formed properly in the proper location. If the structure is defective, then the process can be adjusted, so the defect is less likely to recur.

The working principle of an SCPM (e.g., an SEM) is similar to a camera. A camera takes a picture by receiving and recording intensity of light reflected or emitted from people or objects. An SCPM takes a "picture" by receiving and recording energies or quantities of charged particles (e.g., electrons) reflected or emitted from the structures of the wafer. Typically, the structures are made on a substrate (e.g., a silicon substrate) that is placed on a platform, referred to as a stage, for imaging. Before taking such a "picture," a charged-particle beam may be projected onto the structures, and when the charged particles are reflected or emitted ("exiting") from the structures (e.g., from the wafer surface, from the structures underneath the wafer surface, or both), a detector of the SCPM may receive and record the energies or quantities of those charged particles to generate an image that may be used for inspection or metrology. To take such a "picture," the charged-particle beam may scan through the wafer (e.g., in a line-by-line or zig-zag manner), and the detector may receive exiting charged particles coming from a region under charged particle-beam projection (referred to as a "beam spot"). The detector may receive and record exiting charged particles from each beam spot one at a time and join the information recorded for all the beam spots to generate the inspection image. Some SCPMs use a single charged-particle beam (referred to as a "single-beam SCPM," such as a single-beam SEM) to take a single "picture" to generate the inspection image, while some SCPMs use multiple charged-particle beams (referred to as a "multi-beam SCPM," such as a multi-beam SEM) to take multiple "sub-pictures" of the wafer in parallel and stitch them together to generate the inspection image. By using multiple charged-particle beams, the SCPM may provide more charged-particle beams onto the structures for obtaining these multiple "sub-pictures," resulting in more charged particles exiting from the structures. Accordingly, the detector may receive more exiting charged particles simultaneously and generate inspection images of the structures of the wafer with higher efficiency and faster speed.

Generating and processing these images to determine whether any defects exist (sometimes as small as the nanometer scale) are computationally intensive. And as the physical sizes of IC components continue to shrink, accuracy and yield in defect detection become more important. To inspect a single wafer, it is not uncommon for an inspection system to generate and process a substantial number of images. For example, if each image taken corresponds to 6 µm × 6 µm portion of a wafer, for a 200mm wafer, it would take over 872 million images to image the entire wafer. If these images are not processed and evaluated efficiently, not surprisingly, yield will be dramatically impacted, thereby affecting the wafer throughput.

As the physical sizes of IC components continue to shrink, accuracy and yield in defect detection become more important. Metrology tools can be used to determine whether the ICs are correctly manufactured by identifying a number of defects on each wafer, including at different levels of detail, such as a pattern level, an image (field of view) level, a die level, a care area level, or a wafer level.

Using electrons to obtain an image (e.g., a charged-particle beam image) can present challenges, such as charge buildup in the structures being measured. Charge accumulation on the measured sample can lead to degradation of the produced images and are known to introduce different types of artifacts at multiple length scales, such as distortions, uneven brightness, and image blurring.

Moreover, as manufacturing of integrated circuits is performed layer-by-layer, patterns are produced over previous layers. Metrology and inspections can be performed on each layer to guarantee the needed quality of the printed patterns. Inspections can include defect detection, such as if the layers are stacked as the intended design. If the layers are not stacked as intended, this may lead to edge placement error (EPE) and overlay (OV) errors between two consecutive layers. Using high-energy tools to take an image of a top layer may cause an image of a lower layer (e.g., a layer beneath the top layer) to "bleed through" into the top layer image, thereby mixing the information content of the top layer image with that of the lower layer.

Embodiments of the present disclosure can provide a method of charge removal and correction from CPB images. A two-stage measurement process is performed: first, a fast non-damaging and lower charge inducing measurement (e.g., a first CPB image) is made, then a second measurement is performed with CPB tool settings for a higher quality image (e.g., a second CPB image). A deep learning model may be used to perform charge removal and image corrections. The first CPB measurement serves as an anchor to predict a deformation map of the second CPB image. The deformation map may be predicted using a generative deep learning model, such as a diffusion model.

Embodiments of the present disclosure can also provide another method of charge removal and correction from CPB images. A two-stage measurement process is performed: first, a fast non-damaging and lower charge inducing measurement (e.g., a first CPB image) is made, then a second measurement is performed with CPB tool settings for a higher quality image (e.g., a second CPB image). The first CPB image and the second CPB image may be used to train a machine learning diffusion model, where the first CPB image is used as a style guide to control an image generation process. The trained diffusion model may be used to remove charge artifacts from the second CPB image.

Embodiments of the present disclosure can also provide a method of disentangling high-energy CPB images that include multilayer patterns in the image. A first lower energy CPB image of each layer is obtained before a next layer is fabricated. A second lower energy CPB image is obtained after the next layer is fabricated. A high energy CPB image of at least two consecutive layers is obtained. A machine learning model is trained to map the high energy CPB image to the lower energy CPB images. The trained model may be used to estimate edge placement error, for example, on subsequent CPB images.

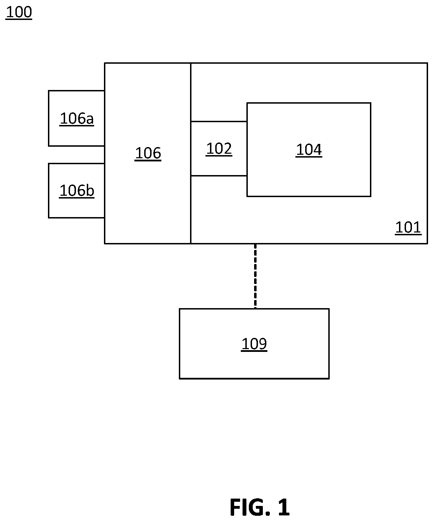

**Fig. 1** illustrates an exemplary charged-particle beam inspection (CPBI) system 100 consistent with embodiments of the present disclosure. CPBI system 100 may be used for imaging. For example, CPBI system 100 may use an electron beam for imaging. As shown in **Fig. 1****,** CPBI system 100 includes a main chamber 101, a load/lock chamber 102, a beam tool 104, and an equipment front end module (EFEM) 106. Beam tool 104 is located within main chamber 101. EFEM 106 includes a first loading port 106a and a second loading port 106b. EFEM 106 may include additional loading port(s). First loading port 106a and second loading port 106b receive wafer front opening unified pods (FOUPs) that contain wafers (e.g., semiconductor wafers or wafers made of other material(s)) or samples to be inspected (the terms "wafers" and "samples" may be used interchangeably). A "lot" is a plurality of wafers that may be loaded for processing as a batch.

One or more robotic arms (not shown) in EFEM 106 may transport the wafers to load/lock chamber 102. Load/lock chamber 102 is connected to a load/lock vacuum pump system (not shown) which removes gas molecules in load/lock chamber 102 to reach a first pressure below the atmospheric pressure. After reaching the first pressure, one or more robotic arms (not shown) may transport the wafer from load/lock chamber 102 to main chamber 101. Main chamber 101 is connected to a main chamber vacuum pump system (not shown) which removes gas molecules in main chamber 101 to reach a second pressure below the first pressure. After reaching the second pressure, the wafer is subject to inspection by beam tool 104. Beam tool 104 may be a single-beam system or a multi-beam system.

A controller 109 is electronically connected to beam tool 104. Controller 109 may be a computer that may execute various controls of CPBI system 100. While controller 109 is shown in **Fig. 1** as being outside of the structure that includes main chamber 101, load/lock chamber 102, and EFEM 106, it is appreciated that controller 109 may be a part of the structure.

In some embodiments, controller 109 may include one or more processors (not shown). A processor may be a generic or specific electronic device capable of manipulating or processing information. For example, the processor may include any combination of any number of a central processing unit (or "CPU"), a graphics processing unit (or "GPU"), an optical processor, a programmable logic controller, a microcontroller, a microprocessor, a digital signal processor, an intellectual property (IP) core, a Programmable Logic Array (PLA), a Programmable Array Logic (PAL), a Generic Array Logic (GAL), a Complex Programmable Logic Device (CPLD), a Field-Programmable Gate Array (FPGA), a System On Chip (SoC), an Application-Specific Integrated Circuit (ASIC), and any type circuit capable of data processing. The processor may also be a virtual processor that includes one or more processors distributed across multiple machines or devices coupled via a network.

In some embodiments, controller 109 may further include one or more memories (not shown). A memory may be a generic or specific electronic device capable of storing codes and data accessible by the processor (e.g., via a bus). For example, the memory may include any combination of any number of a random-access memory (RAM), a read-only memory (ROM), an optical disc, a magnetic disk, a hard drive, a solid-state drive, a flash drive, a security digital (SD) card, a memory stick, a compact flash (CF) card, or any type of storage device. The codes may include an operating system (OS) and one or more application programs (or "apps") for specific tasks. The memory may also be a virtual memory that includes one or more memories distributed across multiple machines or devices coupled via a network.

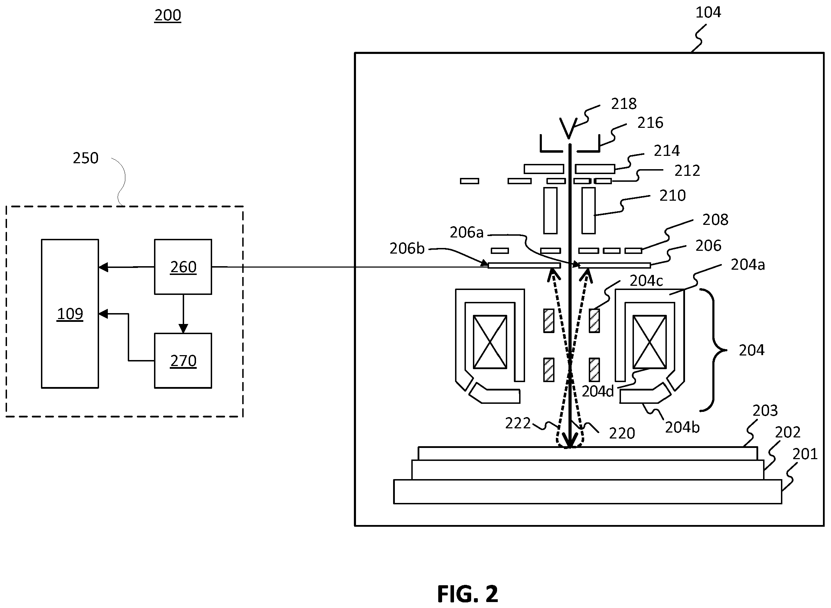

**Fig. 2** illustrates an example imaging system 200 consistent with embodiments of the present disclosure. Beam tool 104 of **Fig. 2** may be configured for use in CPBI system 100. Beam tool 104 may be a single beam apparatus or a multi-beam apparatus. As shown in **Fig. 2****,** beam tool 104 includes a motorized sample stage 201, and a wafer holder 202 supported by motorized sample stage 201 to hold a wafer 203 to be inspected. Beam tool 104 further includes an objective lens assembly 204, a charged-particle detector 206 (which includes charged-particle sensor surfaces 206a and 206b), an objective aperture 208, a condenser lens 210, a beam limit aperture 212, a gun aperture 214, an anode 216, and a cathode 218. Objective lens assembly 204, in some embodiments, may include a modified swing objective retarding immersion lens (SORIL), which includes a pole piece 204a, a control electrode 204b, a deflector 204c, and an exciting coil 204d. Beam tool 104 may additionally include an Energy Dispersive X-ray Spectrometer (EDS) detector (not shown) to characterize the materials on wafer 203.

A primary charged-particle beam 220 (or simply "primary beam 220"), such as an electron beam, is emitted from cathode 218 by applying an acceleration voltage between anode 216 and cathode 218. Primary beam 220 passes through gun aperture 214 and beam limit aperture 212, both of which may determine the size of charged-particle beam entering condenser lens 210, which resides below beam limit aperture 212. Condenser lens 210 focuses primary beam 220 before the beam enters objective aperture 208 to set the size of the charged-particle beam before entering objective lens assembly 204. Deflector 204c deflects primary beam 220 to facilitate beam scanning on the wafer. For example, in a scanning process, deflector 204c may be controlled to deflect primary beam 220 sequentially onto different locations of top surface of wafer 203 at different time points, to provide data for image reconstruction for different parts of wafer 203. Moreover, deflector 204c may also be controlled to deflect primary beam 220 onto different sides of wafer 203 at a particular location, at different time points, to provide data for stereo image reconstruction of the wafer structure at that location. Further, in some embodiments, anode 216 and cathode 218 may generate multiple primary beams 220, and beam tool 104 may include a plurality of deflectors 204c to project the multiple primary beams 220 to different parts/sides of the wafer at the same time, to provide data for image reconstruction for different parts of wafer 203.

Exciting coil 204d and pole piece 204a generate a magnetic field that begins at one end of pole piece 204a and terminates at the other end of pole piece 204a. A part of wafer 203 being scanned by primary beam 220 may be immersed in the magnetic field and may be electrically charged, which, in turn, creates an electric field. The electric field reduces the energy of impinging primary beam 220 near the surface of wafer 203 before it collides with wafer 203. Control electrode 204b, being electrically isolated from pole piece 204a, controls an electric field on wafer 203 to prevent micro-arching of wafer 203 and to ensure proper beam focus.

A secondary charged-particle beam 222 (or "secondary beam 222"), such as secondary electron beams, may be emitted from the part of wafer 203 upon receiving primary beam 220. Secondary beam 222 may form a beam spot on sensor surfaces 206a and 206b of charged-particle detector 206. Charged-particle detector 206 may generate a signal (e.g., a voltage, a current, or the like) that represents an intensity of the beam spot and provide the signal to an image processing system 250. The intensity of secondary beam 222, and the resultant beam spot, may vary according to the external or internal structure of wafer 203. Moreover, as discussed above, primary beam 220 may be projected onto different locations of the top surface of the wafer or different sides of the wafer at a particular location, to generate secondary beams 222 (and the resultant beam spot) of different intensities. Therefore, by mapping the intensities of the beam spots with the locations of wafer 203, the processing system may reconstruct an image that reflects the internal or surface structures of wafer 203.

Imaging system 200 may be used for inspecting a wafer 203 on motorized sample stage 201 and includes beam tool 104, as discussed above. Imaging system 200 may also include an image processing system 250 that includes an image acquirer 260, storage 270, and controller 109. Image acquirer 260 may include one or more processors. For example, image acquirer 260 may include a computer, server, mainframe host, terminals, personal computer, any kind of mobile computing devices, and the like, or a combination thereof. Image acquirer 260 may connect with a detector 206 of beam tool 104 through a medium such as an electrical conductor, optical fiber cable, portable storage media, IR, Bluetooth, internet, wireless network, wireless radio, or a combination thereof. Image acquirer 260 may receive a signal from detector 206 and may construct an image. Image acquirer 260 may thus acquire images of wafer 203. Image acquirer 260 may also perform various post-processing functions, such as generating contours, superimposing indicators on an acquired image, and the like. Image acquirer 260 may perform adjustments of brightness and contrast, or the like of acquired images. Storage 270 may be a storage medium such as a hard disk, cloud storage, random access memory (RAM), other types of computer readable memory, and the like. Storage 270 may be coupled with image acquirer 260 and may be used for saving scanned raw image data as original images, post-processed images, or other images assisting of the processing. Image acquirer 260 and storage 270 may be connected to controller 109. In some embodiments, image acquirer 260, storage 270, and controller 109 may be integrated together as one control unit.

In some embodiments, image acquirer 260 may acquire one or more images of a sample based on an imaging signal received from detector 206. An imaging signal may correspond to a scanning operation for conducting charged particle imaging. An acquired image may be a single image including a plurality of imaging areas. The single image may be stored in storage 270. The single image may be an original image that may be divided into a plurality of regions. Each of the regions may include one imaging area containing a feature of wafer 203.

Consistent with some embodiments of this disclosure, a computer-implemented method of identifying defects on a wafer under inspection may include obtaining training data that includes an inspection image of a fabricated integrated circuit (IC) and design layout data of the IC. The obtaining operation, as used herein, may refer to accepting, taking in, admitting, gaining, acquiring, retrieving, receiving, reading, accessing, collecting, or any operation for inputting data. An inspection image, as used herein, may refer to an image generated as a result of an inspection process performed by a charged-particle inspection apparatus (e.g., system 100 of **Fig. 1** or system 200 of **Fig. 2**). For example, an inspection image may be an SCPM image generated by image processing system 250 in **Fig. 2****.** A fabricated IC in this disclosure may refer to an IC manufactured on a sample (e.g., a wafer) in a semiconductor manufacturing process (e.g., a photolithography process). For example, the fabricated IC may be manufactured in a die of the sample. Design layout data of an IC, as used herein, may refer to data representing a designed layout of the IC. In some embodiments, the design layout data may include a design layout file in a Graphic Design System (GDS) format (e.g., a GDS layout file). The design layout file may be visualized (also referred to as "rendered") to be a 2D image (referred to as a "rendered image" herein) that presents the layout of the IC. The rendered image may include various geometric features (e.g., vertices, edges, corners, polygons, holes, bridges, vias, or the like) of the IC.

In some embodiments, the design layout data of the IC may include an image (e.g., the rendered image) rendered based on GDS clip data of the IC. GDS clip data of an IC, as used herein, may refer to design layout data of the IC that is to be fabricated in a die, which is of the GDS format. In some embodiments, the design layout data of the IC may include only a design layout file (e.g., the GDS clip data) of the IC. In some embodiments, the design layout data of the IC may include only the rendered image of the IC. In some embodiments, the design layout data of the IC may include only a golden image of the IC. In some embodiments, the design layout data may include any combination of the design layout file, the golden image, and the rendered image of the IC.

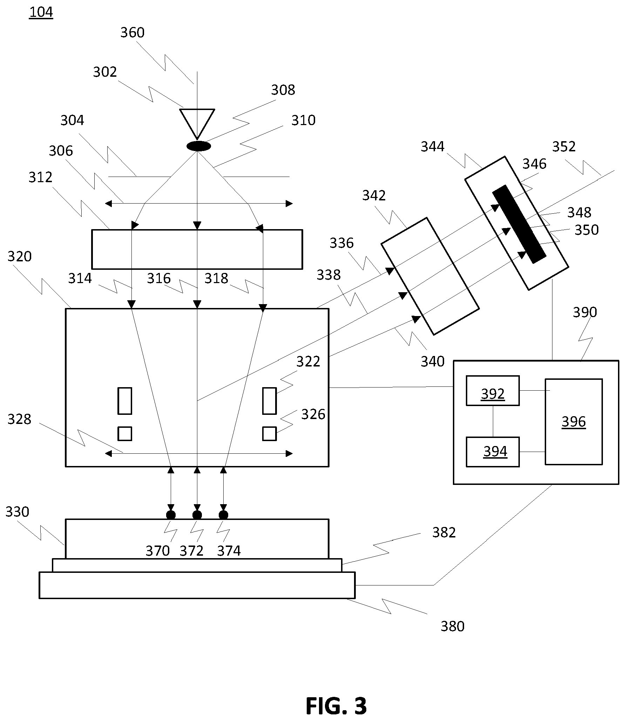

**Fig. 3** illustrates a schematic diagram of an example multi-beam beam tool 104 (also referred to herein as apparatus 104) and an image processing system 390 that may be configured for use in CPBI system 100 (**Fig. 1**), consistent with embodiments of the present disclosure.

Beam tool 104 comprises a charged-particle source 302, a gun aperture 304, a condenser lens 306, a primary charged-particle beam 310 emitted from charged-particle source 302, a source conversion unit 312, a plurality of beamlets 314, 316, and 318 of primary charged-particle beam 310, a primary projection optical system 320, a motorized wafer stage 380, a wafer holder 382, multiple secondary charged-particle beams 336, 338, and 340, a secondary optical system 342, and a charged-particle detection device 344. Primary projection optical system 320 can comprise a beam separator 322, a deflection scanning unit 326, and an objective lens 328. Charged-particle detection device 344 can comprise detection sub-regions 346, 348, and 350.

Charged-particle source 302, gun aperture 304, condenser lens 306, source conversion unit 312, beam separator 322, deflection scanning unit 326, and objective lens 328 can be aligned with a primary optical axis 360 of apparatus 104. Secondary optical system 342 and charged-particle detection device 344 can be aligned with a secondary optical axis 352 of apparatus 104.

Charged-particle source 302 can emit one or more charged particles, such as electrons, protons, ions, muons, or any other particle carrying electric charges. In some embodiments, charged-particle source 302 may be an electron source. For example, charged-particle source 302 may include a cathode, an extractor, or an anode, wherein primary electrons can be emitted from the cathode and extracted or accelerated to form primary charged-particle beam 310 (in this case, a primary electron beam) with a crossover (virtual or real) 308. For ease of explanation without causing ambiguity, electrons are used as examples in some of the descriptions herein. However, it should be noted that any charged particle may be used in any embodiment of this disclosure, not limited to electrons. Primary charged-particle beam 310 can be visualized as being emitted from crossover 308. Gun aperture 304 can block off peripheral charged particles of primary charged-particle beam 310 to reduce Coulomb effect. The Coulomb effect may cause an increase in size of probe spots.

Source conversion unit 312 can comprise an array of image-forming elements and an array of beam-limit apertures. The array of image-forming elements can comprise an array of micro-deflectors or micro-lenses. The array of image-forming elements can form a plurality of parallel images (virtual or real) of crossover 308 with a plurality of beamlets 314, 316, and 318 of primary charged-particle beam 310. The array of beam-limit apertures can limit the plurality of beamlets 314, 316, and 318. While three beamlets 314, 316, and 318 are shown in **Fig. 3****,** embodiments of the present disclosure are not so limited. For example, in some embodiments, the apparatus 104 may be configured to generate a first number of beamlets. In some embodiments, the first number of beamlets may be in a range from 1 to 1000. In some embodiments, the first number of beamlets may be in a range from 200-500. In some embodiments, an apparatus 104 may generate 400 beamlets.

Condenser lens 306 can focus primary charged-particle beam 310. The electric currents of beamlets 314, 316, and 318 downstream of source conversion unit 312 can be varied by adjusting the focusing power of condenser lens 306 or by changing the radial sizes of the corresponding beam-limit apertures within the array of beam-limit apertures. Objective lens 328 can focus beamlets 314, 316, and 318 onto a wafer 330 for imaging, and can form a plurality of probe spots 370, 372, and 374 on a surface of wafer 330.

Beam separator 322 can be a beam separator of Wien filter type generating an electrostatic dipole field and a magnetic dipole field. In some embodiments, if they are applied, the force exerted by the electrostatic dipole field on a charged particle (e.g., an electron) of beamlets 314, 316, and 318 can be substantially equal in magnitude and opposite in a direction to the force exerted on the charged particle by magnetic dipole field. Beamlets 314, 316, and 318 can, therefore, pass straight through beam separator 322 with zero deflection angle. However, the total dispersion of beamlets 314, 316, and 318 generated by beam separator 322 can also be non-zero. Beam separator 322 can separate secondary charged-particle beams 336, 338, and 340 from beamlets 314, 316, and 318 and direct secondary charged-particle beams 336, 338, and 340 towards secondary optical system 342.

Deflection scanning unit 326 can deflect beamlets 314, 316, and 318 to scan probe spots 370, 372, and 374 over a surface area of wafer 330. In response to the incidence of beamlets 314, 316, and 318 at probe spots 370, 372, and 374, secondary charged-particle beams 336, 338, and 340 may be emitted from wafer 330. Secondary charged-particle beams 336, 338, and 340 may comprise charged particles (e.g., electrons) with a distribution of energies. For example, secondary charged-particle beams 336, 338, and 340 may be secondary electron beams including secondary electrons (energies ≤ 50 eV) and backscattered electrons (energies between 50 eV and landing energies of beamlets 314, 316, and 318). Secondary optical system 342 can focus secondary charged-particle beams 336, 338, and 340 onto detection sub-regions 346, 348, and 350 of charged-particle detection device 344. Detection sub-regions 346, 348, and 350 may be configured to detect corresponding secondary charged-particle beams 336, 338, and 340 and generate corresponding signals (e.g., voltage, current, or the like) used to reconstruct an inspection image of structures on or underneath the surface area of wafer 330.

The generated signals may represent intensities of secondary charged-particle beams 336, 338, and 340 and may be provided to image processing system 390 that is in communication with charged-particle detection device 344, primary projection optical system 320, and motorized wafer stage 380. The movement speed of motorized wafer stage 380 may be synchronized and coordinated with the beam deflections controlled by deflection scanning unit 326, such that the movement of the scan probe spots (e.g., scan probe spots 370, 372, and 374) may orderly cover regions of interest on the wafer 330. The parameters of such synchronization and coordination may be adjusted to adapt to different materials of wafer 330. For example, different materials of wafer 330 may have different resistance-capacitance characteristics that may cause different signal sensitivities to the movement of the scan probe spots.

The intensity of secondary charged-particle beams 336, 338, and 340 may vary according to the external or internal structure of wafer 330, and thus may indicate whether wafer 330 includes defects. Moreover, as discussed above, beamlets 314, 316, and 318 may be projected onto different locations of the top surface of wafer 330, or different sides of local structures of wafer 330, to generate secondary charged-particle beams 336, 338, and 340 that may have different intensities. Therefore, by mapping the intensity of secondary charged-particle beams 336, 338, and 340 with the areas of wafer 330, image processing system 390 may reconstruct an image that reflects the characteristics of internal or external structures of wafer 330.

In some embodiments, image processing system 390 may include an image acquirer 392, a storage 394, and a controller 396. Image acquirer 392 may comprise one or more processors. For example, image acquirer 392 may comprise a computer, server, mainframe host, terminals, personal computer, any kind of mobile computing devices, or the like, or a combination thereof. Image acquirer 392 may be communicatively coupled to charged-particle detection device 344 of beam tool 104 through a medium such as an electric conductor, optical fiber cable, portable storage media, IR, Bluetooth, internet, wireless network, wireless radio, or a combination thereof. In some embodiments, image acquirer 392 may receive a signal from charged-particle detection device 344 and may construct an image. Image acquirer 392 may thus acquire inspection images of wafer 330. Image acquirer 392 may also perform various post-processing functions, such as generating contours, superimposing indicators on an acquired image, or the like. Image acquirer 392 may be configured to perform adjustments of brightness and contrast of acquired images. In some embodiments, storage 394 may be a storage medium such as a hard disk, flash drive, cloud storage, random access memory (RAM), other types of computer-readable memory, or the like. Storage 394 may be coupled with image acquirer 392 and may be used for saving scanned raw image data as original images, and post-processed images. Image acquirer 392 and storage 394 may be connected to controller 396. In some embodiments, image acquirer 392, storage 394, and controller 396 may be integrated together as one control unit.

In some embodiments, image acquirer 392 may acquire one or more inspection images of a wafer based on an imaging signal received from charged-particle detection device 344. An imaging signal may correspond to a scanning operation for conducting charged particle imaging. An acquired image may be a single image comprising a plurality of imaging areas. The single image may be stored in storage 394. The single image may be an original image that may be divided into a plurality of regions. Each of the regions may comprise one imaging area containing a feature of wafer 330. The acquired images may comprise multiple images of a single imaging area of wafer 330 sampled multiple times over a time sequence. The multiple images may be stored in storage 394. In some embodiments, image processing system 390 may be configured to perform image processing steps with the multiple images of the same location of wafer 330.

In some embodiments, image processing system 390 may include measurement circuits (e.g., analog-to-digital converters) to obtain a distribution of the detected secondary charged particles (e.g., secondary electrons). The charged-particle distribution data collected during a detection time window, in combination with corresponding scan path data of beamlets 314, 316, and 318 incident on the wafer surface, can be used to reconstruct images of the wafer structures under inspection. The reconstructed images can be used to reveal various features of the internal or external structures of wafer 330, and thereby can be used to reveal any defects that may exist in the wafer.

In some embodiments, the charged particles may be electrons. When electrons of primary charged-particle beam 310 are projected onto a surface of wafer 330 (e.g., probe spots 370, 372, and 374), the electrons of primary charged-particle beam 310 may penetrate the surface of wafer 330 for a certain depth, interacting with particles of wafer 330. Some electrons of primary charged-particle beam 310 may elastically interact with (e.g., in the form of elastic scattering or collision) the materials of wafer 330 and may be reflected or recoiled out of the surface of wafer 330. An elastic interaction conserves the total kinetic energies of the bodies (e.g., electrons of primary charged-particle beam 310) of the interaction, in which the kinetic energy of the interacting bodies does not convert to other forms of energy (e.g., heat, electromagnetic energy, or the like). Such reflected electrons generated from elastic interaction may be referred to as backscattered electrons (BSEs). Some electrons of primary charged-particle beam 310 may inelastically interact with (e.g., in the form of inelastic scattering or collision) the materials of wafer 330. An inelastic interaction does not conserve the total kinetic energies of the bodies of the interaction, in which some or all of the kinetic energy of the interacting bodies convert to other forms of energy. For example, through the inelastic interaction, the kinetic energy of some electrons of primary charged-particle beam 310 may cause electron excitation and transition of atoms of the materials. Such inelastic interaction may also generate electrons exiting the surface of wafer 330, which may be referred to as secondary electrons (SEs). Yield or emission rates of BSEs and SEs depend on, e.g., the material under inspection and the landing energy of the electrons of primary charged-particle beam 310 landing on the surface of the material, among others. The energy of the electrons of primary charged-particle beam 310 may be imparted in part by its acceleration voltage (e.g., the acceleration voltage between the anode and cathode of charged-particle source 302 in **Fig. 3**). The quantity of BSEs and SEs may be more or fewer (or even the same) than the injected electrons of primary charged-particle beam 310.

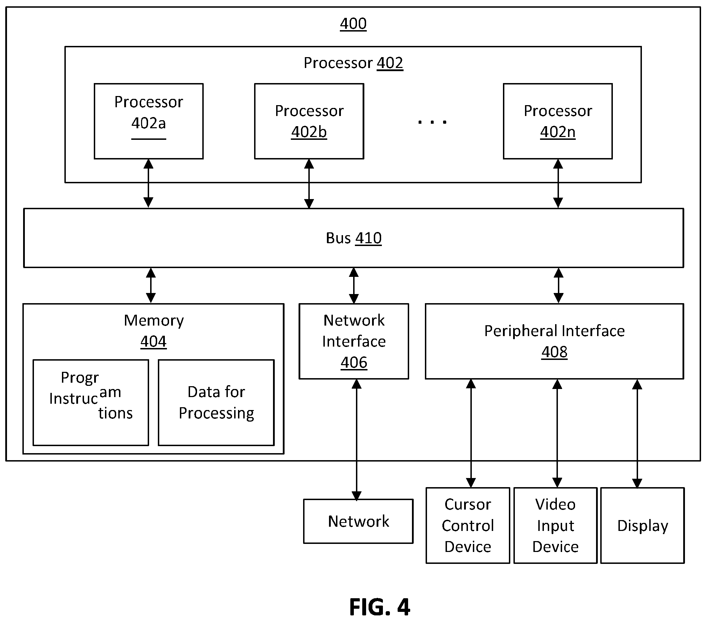

**Fig. 4** is a block diagram of an example server 400, consistent with embodiments of the disclosure. As shown in **Fig. 4****,** server 400 can include processor 402. When processor 402 executes instructions described herein, server 400 can become a specialized machine. Processor 402 can be any type of circuitry capable of manipulating or processing information. For example, processor 402 can include any combination of any number of a central processing unit ("CPU"), a graphics processing unit ("GPU"), a neural processing unit ("NPU"), a microcontroller unit ("MCU"), an optical processor, a programmable logic controller, a microcontroller, a microprocessor, a digital signal processor, an intellectual property (IP) core, a Programmable Logic Array (PLA), a Programmable Array Logic (PAL), a Generic Array Logic (GAL), a Complex Programmable Logic Device (CPLD), a Field-Programmable Gate Array (FPGA), a System On Chip (SoC), an Application-Specific Integrated Circuit (ASIC), or the like. In some embodiments, processor 402 can also be a set of processors grouped as a single logical component. For example, as shown in **Fig. 4****,** processor 402 can include multiple processors, including processor 402a, processor 402b, and processor 402n.

Server 400 can also include memory 404 configured to store data (e.g., a set of instructions, computer codes, intermediate data, or the like). For example, as shown in **Fig. 4****,** the stored data can include program instructions and data for processing. Processor 402 can access the program instructions and data for processing (e.g., via bus 410), and execute the program instructions to perform an operation or manipulation on the data for processing. Memory 404 can include a high-speed random-access storage device or a non-volatile storage device. In some embodiments, memory 404 can include any combination of any number of a random-access memory (RAM), a read-only memory (ROM), an optical disc, a magnetic disk, a hard drive, a solid-state drive, a flash drive, a security digital (SD) card, a memory stick, a compact flash (CF) card, or the like. Memory 404 can also be a group of memories (not shown in **Fig. 4**) grouped as a single logical component.

Bus 410 can be a communication device that transfers data between components inside server 400, such as an internal bus (e.g., a CPU-memory bus), an external bus (e.g., a universal serial bus port, a peripheral component interconnect express port), or the like.

For ease of explanation without causing ambiguity, processor 402 and other data processing circuits are collectively referred to as a "data processing circuit" in this disclosure. The data processing circuit can be implemented entirely as hardware, or as a combination of software, hardware, or firmware. In addition, the data processing circuit can be a single independent module or can be combined entirely or partially into any other component of server 400.

Server 400 can further include network interface 406 to provide wired or wireless communication with a network (e.g., the Internet, an intranet, a local area network, a mobile communications network, or the like). In some embodiments, network interface 406 can include any combination of any number of a network interface controller (NIC), a radio frequency (RF) module, a transponder, a transceiver, a modem, a router, a gateway, a wired network adapter, a wireless network adapter, a Bluetooth adapter, an infrared adapter, a near-field communication ("NFC") adapter, a cellular network chip, or the like.

In some embodiments, optionally, server 400 can further include peripheral interface 408 to provide a connection to one or more peripheral devices. As shown in **Fig. 4****,** the peripheral device can include, but is not limited to, a cursor control device (e.g., a mouse, a touchpad, or a touchscreen), a keyboard, a display (e.g., a cathode-ray tube display, a liquid crystal display, or a light-emitting diode display), a video input device (e.g., a camera or an input interface coupled to a video archive), or the like.

Consistent with some embodiments of this disclosure, the method of charge removal and correction of images, the method of removing charge artifacts from an images, and the method of disentangling high energy CPBI images of multilayer patterns may also include training a machine learning model using the obtained training data. In some embodiments, the machine learning model may be trained by a computer hardware system. In some embodiments, as described elsewhere in this disclosure, the training data may include CPBI images or GDS data.

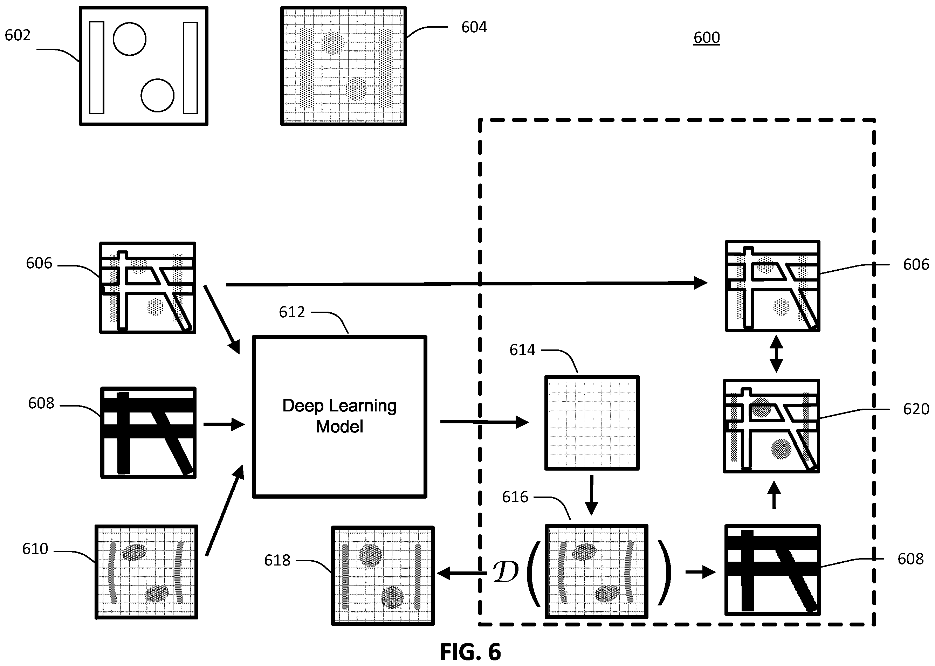

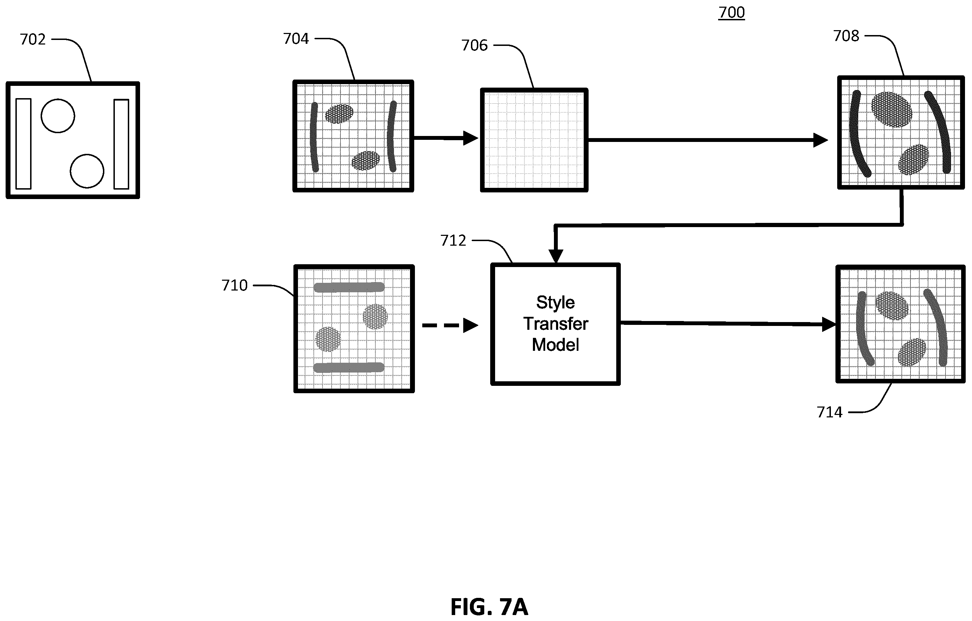

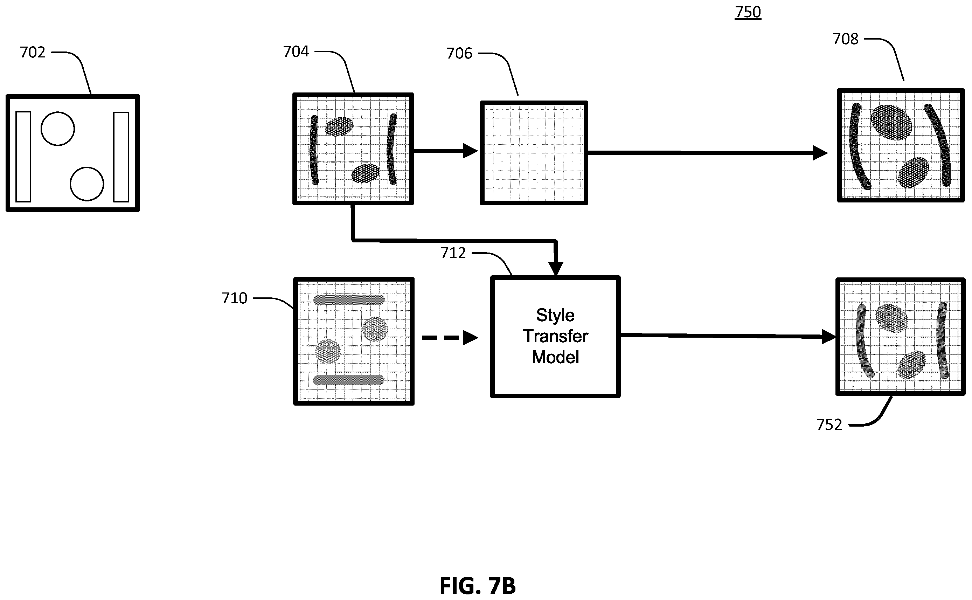

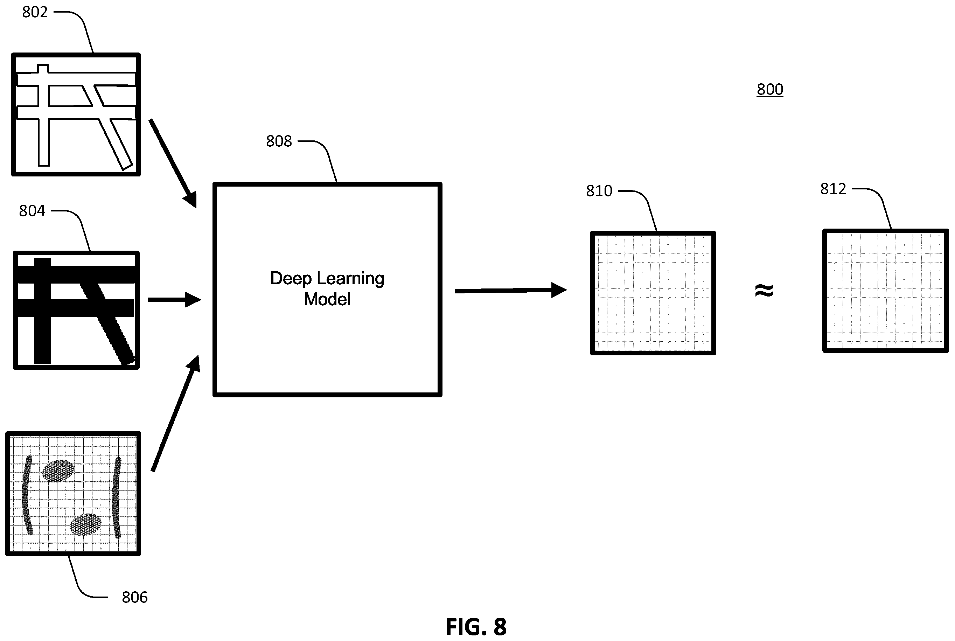

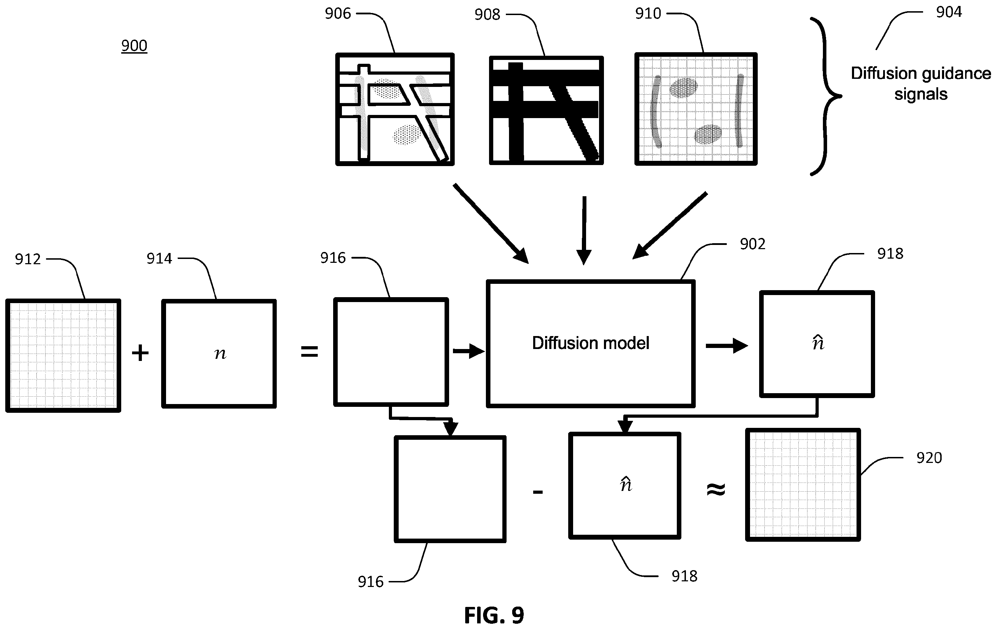

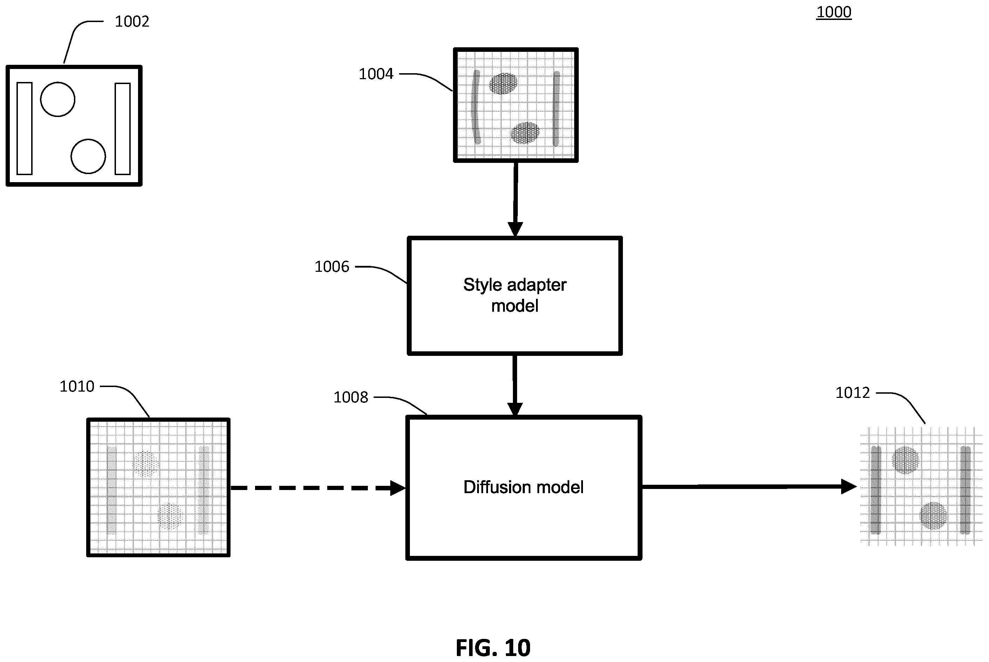

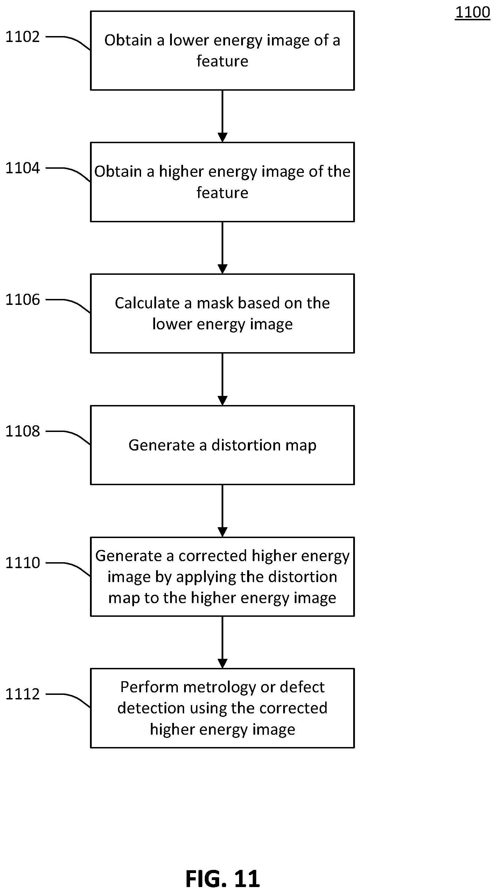

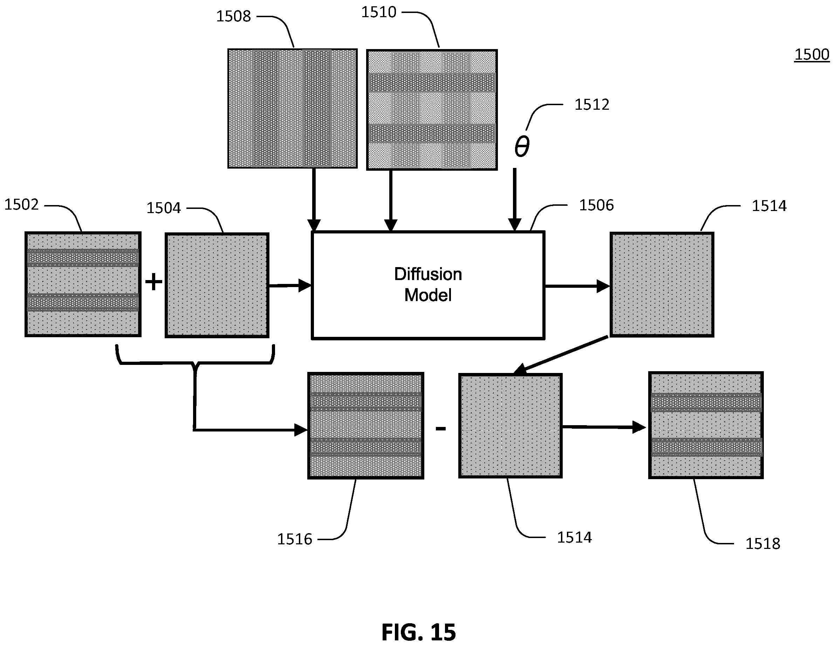

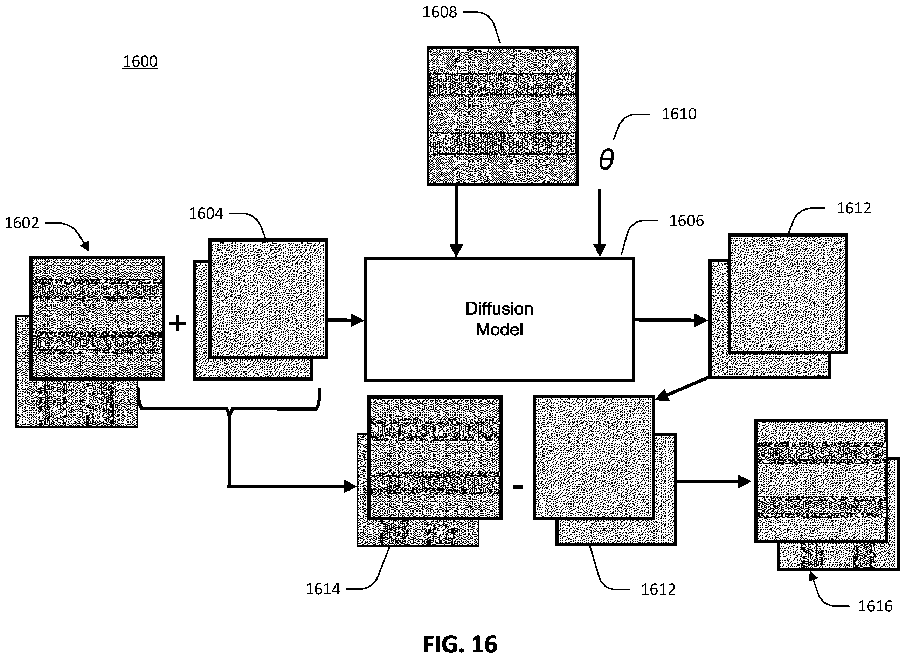

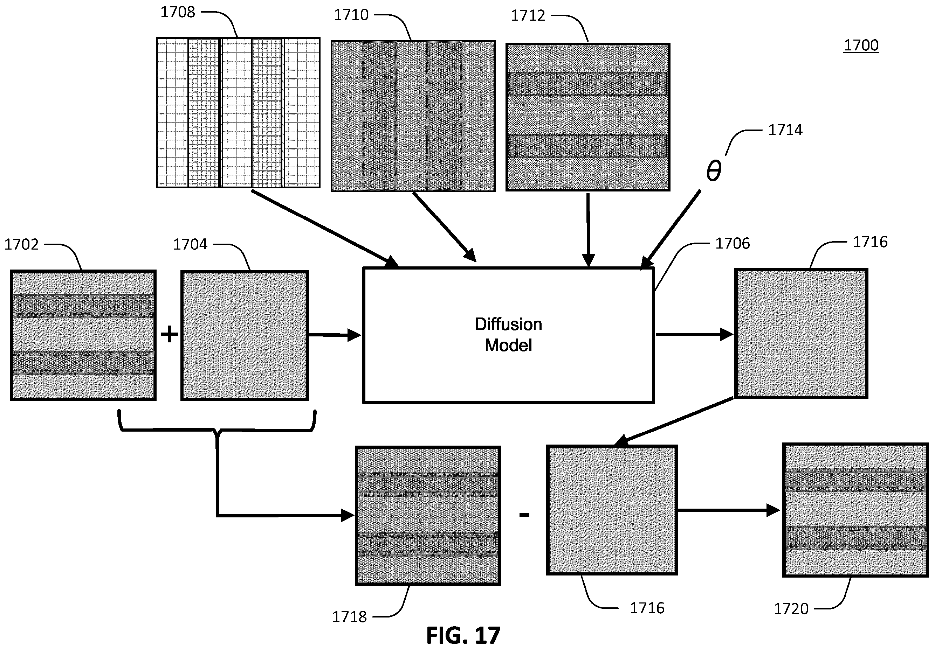

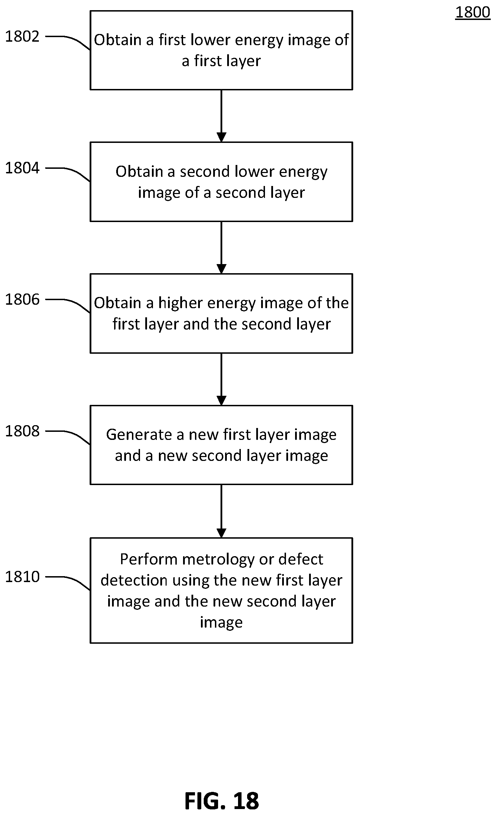

In some embodiments, machine learning may be employed in the generation of inspection images, reference images, or other images associated with apparatus 100 or apparatus 200. For example, in some embodiments, a machine learning system may be operated in association with, e.g., controller 109, image processing system 250, image acquirer 260, storage 270, image processing system 390, image acquirer 392, or storage 394 of **Figs. 1-3****.** In some embodiments, machine learning may be employed in the process 600 of **Fig. 6****,** the process 700 of **Fig. 7A****,** the process 750 of **Fig. 7B****,** the process 800 of **Fig. 8****,** the process 900 of **Fig. 9****,** the process 1000 of **Fig. 10****,** the method 1100 of **Fig. 11** the process 1500 of **Fig. 15****,** the process 1600 of **Fig. 16****,** the process 1700 of **Fig. 17****,** or the method 1800 of **Fig. 18****.**

In some embodiments, a machine learning system may include a discriminative model. In some embodiments, a machine learning system may include a generative model. For example, learning can feature two types of mechanisms: discriminative learning that may be used to create classification and detection algorithms, and generative learning that may be used to create models that can render images. For example, as described further below, a generative model may be configured for generating an image from a design clip that resembles a corresponding location on a wafer in an SCPM image. This may be performed by 1) training the generative model with design clips and the associated actual SCPM images from those locations on the wafer; and 2) using the model in inference mode to feed the model design clips in locations for which simulated SCPM images are desired. Such simulated images can be used as reference images in, e.g., die-to-database inspection or in an inspection in which two or more images are compared.

If the model(s) include one or more discriminative models, the discriminative model(s) may have any suitable architecture and/or configuration known in the art. Discriminative models, also called conditional models, are a class of models used in machine learning for modeling the dependence of an unobserved variable "y" on an observed variable "x." Within a probabilistic framework, this may be done by modeling a conditional probability distribution P(ylx), which can be used for predicting y based on x. Discriminative models, as opposed to generative models, may not allow one to generate samples from the joint distribution of x and y. However, for tasks such as classification and regression that do not require the joint distribution, discriminative models may yield superior performance. On the other hand, generative models are typically more flexible than discriminative models in expressing dependencies in complex learning tasks. In addition, most discriminative models are inherently supervised and cannot easily be extended to unsupervised learning. Application specific details ultimately dictate the suitability of selecting a discriminative versus generative model.

A generative model can be generally defined as a model that is probabilistic in nature. The generative model can be learned (in that its parameters can be learned) based on a suitable training set of data. Such generative models may have a number of advantages for the embodiments described herein. In addition, the generative model may be configured to have a deep learning architecture in that the generative model may include multiple layers, which may perform a number of algorithms or transformations. The number of layers included in the generative model may depend on the particular use case. For practical purposes, a suitable range of layers depends on the type of model deployed and may be from two layers to over 100 layers.

Deep learning is a type of machine learning. Machine learning can be generally defined as a type of artificial intelligence (AI) that provides computers with the ability to learn without being explicitly programmed. Machine learning focuses on the development of computer programs that can teach themselves to grow and change when exposed to new data. Machine learning explores the study and construction of algorithms that can learn from and make predictions on data-such algorithms overcome following strictly static program instructions by making data driven predictions or decisions, through building a model from sample inputs.

The machine learning described herein may be further performed as described in "Introduction to Statistical Machine Learning," by Sugiyama, Morgan Kaufmann, 2016, 534 pages; "Discriminative, Generative, and Imitative Learning," by Jebara, MIT Thesis, 2002, 212 pages; and "Principles of Data Mining (Adaptive Computation and Machine Learning)" by Hand et al., MIT Press, 2001, 578 pages; which are incorporated by reference as if fully set forth herein. The embodiments described herein may be further configured as described in these references.

In some embodiments, a machine learning system may comprise a neural network. For example, a model may be a deep neural network with a set of weights that model the world according to the data that it has been fed to train it. Neural networks can be generally defined as a computational approach which is based on a relatively large collection of neural units inspired by the neural process of a biological brain that solves problems with relatively large clusters of biological neurons connected by axons. Each neural unit is connected with many others, and links can be enforcing or inhibitory in their effect on the activation state of connected neural units. These systems may be trained (e.g., guided by a loss function for given data) rather than explicitly programmed and excel in areas where the solution or feature detection is difficult to express in a traditional computer program.

Neural networks typically consist of multiple layers, and the signal path traverses from front to back. The goal of the neural network is to solve problems inspired by the way that the human brain would. Modern neural network projects typically work with a few thousand to a few billion neural units and billions of connections. The neural network may have any suitable architecture and/or configuration known in the art.

In a further embodiment, a model may comprise a convolutional and deconvolution neural network. For example, the embodiments described herein can take advantage of learning concepts such as a convolution and deconvolution neural network to solve the normally intractable representation conversion problem (e.g., rendering). The model may have any convolution and deconvolution neural network configuration or architecture known in the art. In some embodiments, image processing tasks as described herein may be performed by a convolutional neural network (CNN). A CNN may include several layers, including an input layer, a convolutional layer, an activation layer, a pooling layer, a flattening layer, a fully connected layer, and an output layer. In some configurations, the CNN may include one or more layers of each type.

A neural network, as used herein, may refer to a computing model for analyzing underlying relationships in a set of input data. The neural network may include a set of connected units or nodes (referred to as "neurons"), structured as different layers, where each connection (also referred to as an "edge") may obtain and send a signal between neurons of neighboring layers in a way similar to a synapse in a biological brain. The signal may be any type of data (e.g., a real number). Each neuron may obtain one or more signals as an input and output another signal by applying a non-linear function to the inputted signals. Neurons and edges may typically be weighted by corresponding weights to represent the knowledge the neural network has acquired. During a training process, the weights may be adjusted (e.g., by increasing or decreasing their values) to change the strengths of the signals between the neurons to improve the performance accuracy of the neural network. Different layers of neurons may transform their input signals in different manners (e.g., by applying different non-linear functions or activation functions). The output of the last layer (referred to as an "output layer") may output the analysis result of the neural network, such as, for example, a categorization of the set of input data (e.g., as in image recognition cases), a numerical result, or any type of output data for obtaining an analytical result from the input data.

Training of the neural network, as used herein, may refer to a process of improving the accuracy of the output of the neural network. Typically, the training may be categorized into, for example, supervised training, unsupervised training, and reinforcement training. In the supervised training, a set of target output data (also referred to as "labels" or "ground truth") may be generated based on a set of input data using a method other than the neural network. The neural network may then be fed with the set of input data to generate a set of output data that is typically different from the target output data. Based on the difference between the output data and the target output data, the weights of the neural network may be adjusted in accordance with a rule. If such adjustments are successful, the neural network may generate another set of output data more similar to the target output data in a next iteration using the same input data. If such adjustments are not successful, the weights of the neural network may be adjusted again. After a sufficient number of iterations, the training process may be terminated in accordance with one or more predetermined criteria (e.g., the difference between the final output data and the target output data is below a predetermined threshold, or the number of iterations reaches a predetermined threshold). The trained neural network may be applied to analyze other input data.

In the unsupervised training, the neural network is trained without any external gauge (e.g., labels) to identify patterns in the input data rather than generating labels for them. Typically, the neural network may analyze shared attributes (e.g., similarities and differences) and relationships among the elements of the input data in accordance with one or more predetermined rules or algorithms (e.g., principal component analysis, clustering, anomaly detection, or latent variable identification). The trained neural network may extrapolate the identified relationships to other input data.

In some embodiments, a self-supervised model may be used. A self-supervised model is a type of unsupervised model, meaning that it learns from unlabeled data. The self-supervised model generates its own labels for the data by manipulating the data during training. The data manipulation may include creating a "pretext task" (for example, masking parts of an image) which the model then tries to predict, effectively generating the labels for itself.

In the reinforcement learning, the neural network is trained without any external gauge (e.g., labels) in a trial-and-error manner to maximize benefits in decision making. The input data sets of the neural network may be different in the reinforcement training. For example, a reward value or a penalty value may be determined for the output of the neural network in accordance with one or more rules during training, and the weights of the neural network may be adjusted to maximize the reward values (or to minimize the penalty values). The trained neural network may apply its learned decision-making knowledge to other input data.

During the training of a neural network, a loss function (or referred to as a "cost function") may be used to evaluate the output data. The loss function, as used herein, may map output data of a machine learning model (e.g., the neural network) onto a real number (referred to as a "loss" or a "cost") that intuitively represents a loss or an error (e.g., representing a difference between the output data and target output data) associated with the output data. The training of the neural network may seek to maximize or minimize the loss function (e.g., by pushing the loss towards a local maximum or a local minimum in a loss curve). For example, one or more parameters of the neural network may be adjusted or updated purporting to maximize or minimize the loss function. After adjusting or updating the one or more parameters, the neural network may obtain new input data in a next iteration of its training. When the loss function is maximized or minimized, the training of the neural network may be terminated.

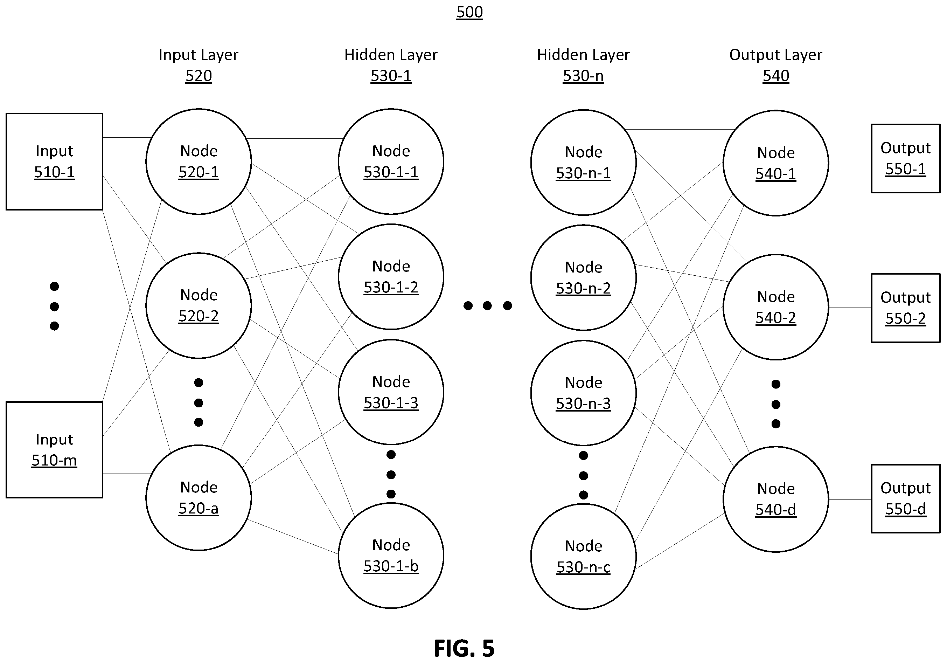

By way of example, **Fig. 5** is a schematic diagram illustrating an example neural network 500, consistent with embodiments of the present disclosure. As depicted in **Fig. 5****,** neural network 500 may include an input layer 520 that receives inputs, including input 510-1, ..., input 510-m (m being an integer). For example, an input of neural network 500 may include any structure or unstructured data (e.g., an image). In some embodiments, neural network 500 may obtain a plurality of inputs simultaneously. For example, in **Fig. 5****,** neural network 500 may obtain m inputs simultaneously. In some embodiments, input layer 520 may obtain m inputs in succession such that input layer 520 receives input 510-1 in a first cycle (e.g., in a first inference) and pushes data from input 510-1 to a hidden layer (e.g., hidden layer 530-1), then receives a second input in a second cycle (e.g., in a second inference) and pushes data from the second input to the hidden layer, and so on. Input layer 520 may obtain any number of inputs in the simultaneous manner, the successive manner, or any manner of grouping the inputs.

Input layer 520 may include one or more nodes, including node 520-1, node 520-2, ..., node 520-a (a being an integer). A node (also referred to as a "machine perceptron" or a "neuron") may model the functioning of a biological neuron. Each node may apply an activation function to received inputs (e.g., one or more of input 510-1, ..., input 510-m). An activation function may include a Heaviside step function, a Gaussian function, a multiquadratic function, an inverse multiquadratic function, a sigmoidal function, a rectified linear unit (ReLU) function (e.g., a ReLU6 function or a Leaky ReLU function), a hyperbolic tangent ("tanh") function, or any non-linear function. The output of the activation function may be weighted by a weight associated with the node. A weight may include a positive value between 0 and 1, or any numerical value that may scale outputs of some nodes in a layer more or less than outputs of other nodes in the same layer.

As further depicted in **Fig. 5****,** neural network 500 includes multiple hidden layers, including hidden layer 530-1, ..., hidden layer 530-n (n being an integer). When neural network 500 includes more than one hidden layer, it may be referred to as a "deep neural network" (DNN). Each hidden layer may include one or more nodes. For example, in **Fig. 5****,** hidden layer 530-1 includes node 530-1-1, node 530-1-2, node 530-1-3, ..., node 530-1-b (b being an integer), and hidden layer 530-n includes node 530-n-1, node 530-n-2, node 530-n-3, ..., node 530-n-c (c being an integer). Similar to nodes of input layer 520, nodes of the hidden layers may apply the same or different activation functions to outputs from connected nodes of a previous layer, and weight the outputs from the activation functions by weights associated with the nodes.

As further depicted in **Fig. 5****,** neural network 500 may include an output layer 540 that finalizes outputs, including output 550-1, output 550-2, ..., output 550-d (d being an integer). Output layer 540 may include one or more nodes, including node 540-1, node 540-2, ..., node 540-d. Similar to nodes of input layer 520 and of the hidden layers 530, nodes of output layer 540 may apply activation functions to outputs from connected nodes of a previous layer and weight the outputs from the activation functions by weights associated with the nodes.

Although nodes of each hidden layer of neural network 500 are depicted in **Fig. 5** to be connected to each node of its previous layer and next layer (referred to as "fully connected"), the layers of neural network 500 may use any connection scheme. For example, one or more layers (e.g., input layer 520, hidden layer 530-1, ..., hidden layer 530-n, or output layer 540) of neural network 500 may be connected using a convolutional scheme, a sparsely connected scheme, or any connection scheme that uses fewer connections between one layer and a previous layer than the fully connected scheme as depicted in **Fig. 5****.**

Moreover, although the inputs and outputs of the layers of neural network 500 are depicted as propagating in a forward direction (e.g., being fed from input layer 520 to output layer 540, referred to as a "feedforward network") in **Fig. 5****,** neural network 500 may additionally or alternatively use backpropagation (e.g., feeding data from output layer 540 towards input layer 520) for other purposes. Accordingly, although neural network 500 is depicted similar to a convolutional neural network (CNN), neural network 500 may include a recurrent neural network (RNN) or any other neural network.

Using electrons to obtain an image (e.g., a CPB image) can present challenges, such as charge buildup in the structures being measured. Charge accumulation on the measured sample can lead to degradation of the produced images and are known to introduce different types of artifacts at multiple length scales, such as distortions, uneven brightness, and image blurring. Grid distortions can introduce placement errors up to 4 nm. Different mitigations and correction strategies have been proposed, which include, for example, center of gravity alignment per feature; patch-based alignment; data-driven methods using deep learning models for deformation correction; and quad scans, where a feature is scanned in four orthogonal scan directions and the scans are then averaged.

Grid distortion effects are typically resolved using image to image alignment methods. Currently deployed methods rely on the assumption that the field of view perturbation is determined by the sensing or measurement setup and not by the underlying structure itself. For example, center of gravity alignment is computationally expensive and is difficult to apply to non-periodic patterns; patch-based alignment lacks sufficient accuracy; and data-driven alignment methods require a significant amount of data and only aim to align the patterns, not to correct for charge-induced alignment deformations. The quad scan method is time-intensive (measuring four times) and possibly damages the measured feature.

A methodology for correcting and removing charge artifacts is proposed, including a measurement process (including two or more stages) followed by a correction step to correct image deformations and remove charge artifacts from images using a generative diffusion deep learning model. The two-stage measurement process is performed as follows. First, a fast, non-damaging, and lower charge inducing measurement is performed. This measurement can be achieved by reducing the e-beam current, reducing the charge density, or by performing a fast scan of the sample by the CPB tool. The image generated for this first step will have too low of an image quality to be used to perform metrology or inspection tasks. Then, a second CPB tool measurement is performed with the necessary CPB tool settings to obtain a higher quality image. The second image will have a high enough resolution to perform metrology and inspection tasks. However, due to charge effects, the second image may contain charge artifacts (e.g., distortions or other image artifacts) that need to be corrected before being processed for metrology or inspection tasks. In some embodiments, optional complementary measurements may be performed in different time intervals to obtain signals with different time dependence of charge and discharge of the sample.

Deep learning models may be used to perform corrections on the first image and the second image. As the first CPB image is free of artifacts, it may be used as an anchor to correct the charge artifacts of the second CPB image, producing a higher quality image with no charge artifacts. In some embodiments, the optional complementary measurements performed at different time intervals may help improve the results. Measurements taken from the first image may serve as an anchor to predict a deformation map for the second image. The deformation map may be predicted using a generative (e.g., diffusion) deep learning model.

First, measurement Iₗ is performed using CPB tool settings that aim to minimize charge buildup and structure damage, in a lower energy setup. In some embodiments, this can be performed by having a short integration time or a low current. In some embodiments, other settings that help minimize charge build up can be used. Measurement Iₗ can be sparse within the field of view. For example, sub-regions distributed across the field of view may be measured such that they intersect with a high probability with the patterned features. As such, a subset of the field of view is measured in this mode, governed by a mask M. Less data may be measured in the lower charge regime to allow for a high throughput measurement scheme. Such a measurement would result in a poorer quality image that has limited use by itself.

The second measurement Iₕ is a standard CPB image (e.g., an image taken with typical CPB settings that generate higher resolution images for a metrology or inspection task). There are no specific requirements for the measurement Iₕ except that is over the same field of view as the measurement Iₗ. In some embodiments, the field of view may not be the same for the measurements Iₕ and Iₗ, and may be an overlapping field of view.

A generative deep learning model is trained to predict a deformation field D that remaps the charged measurement such that the correlation with the lower charge data Iₗ is maximized. A deep learning model may be trained to predict D such that M · D(Iₕ) is maximally correlated to the portion from the lower charge image M · Iₗ.

For a direct prediction model, a correlation metric may be used since the lower charge image will be affected by high noise or will have a poor resolution. Smoothness properties can be applied on a deformation map. Dataset augmentation may be performed by applying realistic deformations (e.g., low frequency deformation fields) to the second measurement Iₕ and performing a style transfer task to map the deformed images to be in the same domain of those resulting from the lower charge setup. Using this dataset augmentation extension, a generative diffusion model may be trained to capture the distribution of possible deformations given the information in the masked signal.

**Fig. 6** is a flow diagram of a process 600 for image correction to remove charging effects and other possible artifacts of the measurement process, consistent with embodiments of the present disclosure. In some embodiments, the process 600 may be performed by image processing system 250 of **Fig. 2****,** image processing system 390 of **Fig. 3****,** or server 400 of **Fig. 4****.** An image of the structure 602 to be examined in the CPB images is shown in **Fig. 6** for reference. Throughout the present disclosure, it is appreciated that image information can be represented in several forms. For example, an image could be a graphical representation of the image (e.g., displayed at a display device) and could also be represented as digital data (e.g., saved as a file in memory). The image could be represented as an analog representation in the form of electrical signals that convey the image information. The present disclosure can refer to generating, analyzing, or processing of images. It is to be appreciated that such operations directed to images can be performed with respect to any representation of an image (e.g., graphical, electrical signal, binary data, or the like). For example, generating an image can refer to generating an actual graphical representation of the image or generating a binary-data representation of the image that can be read and processed by a computing device.

A lower charge image 604 is taken of the structure 602. The lower charge image 604 may be blurry or may contain noise, local distortions, or other possible artifacts of the measurement process. The "lower charge image" may indicate a "lower resolution image" and the two terms may be used interchangeably herein. The lower charge image 604 may be measured to determine lower charge regions of the lower charge image 604 (shown in masked lower resolution image 606 as a solid outline). A mask 608 may be generated based on image 606, such that the mask 608 identifies the lower charge regions in the lower charge image 604. In some embodiments, the mask 608 may be generated by further processing of the image 604, input by expert knowledge of the structure 602, or may represent a region of measurement performed for the image 604. The regions identified by the mask 608 may include regions of the image 604 that have not been previously measured. A higher charge image 610 is taken of the structure 602, which may include a higher resolution than the lower charge image 604 and may contain charge artifacts or other possible artifacts. The "higher charge image" may indicate a "higher resolution image" and the two terms may be used interchangeably herein. As can be seen from Fig. 6, image 610 has some distortions due to the charging effect on the wafer (e.g., the vertical bars appear curved and the circles appear deformed).

The image 606, the mask 608, and the higher charge image 610 are provided to a deep learning model 612. The deep learning model 612 may include, for example, a U-Net, a convolutional neural network, a convolutional autoencoder, or a transformer. The deep learning model 612 is trained to predict a deformation field D 614, which represents how the higher charge image 610 is deformed relative to the structure 602. The deformation field D 614 is applied to the higher charge image 610 to attempt to correct the deformation of the higher charge image 610 (step 616) to generate a corrected higher resolution image 618 where artifacts (e.g., charge artifacts or other possible artifacts) have been removed.

To generate the deformation field D 614, the deep learning model 612 is trained to maximize a correlation metric between the lower charge image 604 and the higher charge image 610 that may contain deformations or other measurement artifacts. An optional mask 608 may be used depending on the training implementation of the deep learning model 612 and the measurement performed. In some embodiments, the correlation metric may be calculated over the images 620 and 606 that may have the masked version of images 610 and 606 respectively. The mask 608 is applied to the corrected higher charge image 618 to generate an intermediate image 620. The correlation between the intermediate image 620 and the masked lower resolution image 606 is maximized to generate the deformation field D 614.

**Fig. 7A** is a flow diagram of a process 700 for generating data augmentation for an image using a style transfer model, consistent with embodiments of the present disclosure. A style transfer model is a type of model that transforms one image to another image, keeping many characteristics (such as shape or some other defining characteristic) the same, but transforms the style (e.g., some other style characteristic, such as resolution, drawing style, or color scheme), combining the content of one image with the appearance of another image. In some embodiments, an image generated using the process 700 may be used for training the deep learning model 612 described in connection with **Fig. 6****.** In some embodiments, the process 700 may be performed by image processing system 250 of **Fig. 2****,** image processing system 390 of **Fig. 3****,** or server 400 of **Fig. 4****.**

A further transformation may be applied to the higher resolution image, to obtain a new data set. For example, the style of the lower resolution image may be applied to the new data set as a way to generate more examples of more structures. In some embodiments, deformed images may be transformed into the style of the lower resolution image with a known deformation map. A known deformation map is applied to an image of a structure and then the style of known lower resolution images is applied to the deformed images to generate new lower resolution images.

An image of the structure 702 to be generated is shown in **Fig. 7A** for reference. A higher resolution image 704 of the structure 702 is taken. It is noted that the higher resolution image 704 contains deformations as a result of the charging of the wafer surface or other possible measurement artifacts. A deformation map 706 is applied to the higher resolution image 704 to generate a synthetically deformed image 708.

The synthetically deformed image 708 is provided as an input to a style transfer model 712, which has been trained in the style of a lower resolution image 710. The style transfer model 712 generates an output image 714 in the style of the lower resolution image 710 and containing the features of the synthetically deformed image 708. The synthetically deformed image 708 and the output image 714 may be paired together for training other models.

**Fig. 7B** is a flow diagram of another process 750 for generating data augmentation for an image using a style transfer model, consistent with embodiments of the present disclosure. In some embodiments, an image generated using the process 750 may be used for training the deep learning model 612 described in connection with **Fig. 6****.** In some embodiments, the process 750 may be performed by image processing system 250 of **Fig. 2****,** image processing system 390 of **Fig. 3****,** or server 400 of **Fig. 4****.**

An image of the structure 702 to be generated is shown in **Fig. 7B** for reference. The higher resolution image 704 of the structure 702 is taken. It is noted that the higher resolution image 704 contains deformations as a result of the charging of the wafer surface. The deformation map 706 is applied to the higher resolution image 704 to generate the synthetically deformed image 708.

The higher resolution image 704 is provided as an input to the style transfer model 712, which has been trained in the style of the lower resolution image 710. The style transfer model 712 generates an output image 752 in the style of the lower resolution image 710 and containing the features of the higher resolution image 704. The synthetically deformed image 708 and the output image 752 may be paired together for training other models.

**Fig. 8** is a flow diagram of a process 800 for training a deep learning model to predict deformation maps, consistent with embodiments of the present disclosure. In some embodiments, the process 800 may use the data augmentation from the process 700 as described in **Fig. 7A** or from the process 750 as described in **Fig. 7B****.** In some embodiments, the process 800 may be performed by image processing system 250 of **Fig. 2****,** image processing system 390 of **Fig. 3****,** or server 400 of **Fig. 4****.** The process 800 may be used to improve the training process to produce the deformation field D, by randomly generating different masks. A synthetically deformed image 802 may be mapped to the signal domain of a lower charge image (e.g., the solid outline in image 802). A mask 804 may be generated from the mapped image 802. The mapped image 802, the mask 804, and a higher resolution image 806 are provided as inputs to a deep learning model 808. The deep learning model 808 is trained to predict a deformation field D 810. The predicted deformation field D 810 is approximately equal to a synthetic deformation map 812 used for data augmentation. During training, the deep learning model 808 learns to minimize the difference between its prediction (predicted deformation field 810) and the synthetic generated deformation map 812. The synthetic deformation map 812 may be generated using the data augmentation process 700 as described in **Fig. 7A** or the process 750 described in **Fig. 7B****.**

**Fig. 9** is a flow diagram of a process 900 for training a diffusion model to predict deformation maps, consistent with embodiments of the present disclosure. In some embodiments, the process 900 may be performed by image processing system 250 of **Fig. 2****,** image processing system 390 of **Fig. 3****,** or server 400 of **Fig. 4****.** The diffusion model may be conditioned with a lower resolution image, a mask (optional), and a higher resolution image (with deformations). The diffusion model is trained to predict the deformation map D. The diffusion model learns the probability model of distortions expected to be seen given the conditioned images as input. A known deformation map plus noise may be provided as additional inputs to the diffusion model.

A diffusion model 902 receives guidance signals 904. The guidance signals 904 may include a lower resolution image 906, a mask 908 of the lower charge areas in the image 906, and a higher resolution image 910 with deformations resulting from charge effects. In some embodiments, the guidance signals 904 may also include conditioning parameters (not shown in **Fig. 9**). In some embodiments, the conditioning parameters may be provided as a vector. In other embodiments, other types of data structures for representing the conditioning parameters may be used. The conditioning parameters may include information such as settings and general configuration information to describe the mask 908 because the mask alone may not be sufficient to describe the feature. For example, the conditioning parameters may include additional information to know about the target, the measuring process, or other relevant information that complements the acquisition process.

A known deformation map 912 is combined with noise 914 to generate a noisy image 916. The noisy image 916 is provided to the diffusion model 902 as an input.

To train the diffusion model 902, a different level of noise is added to the deformation map 912 at each training sample. For each training iteration, a batch of data including multiple training samples is collected. Each training sample in the batch includes the deformation map 912, a random level of noise, and the diffusion guidance signals 904. The diffusion model 902 is trained to minimize predicted noise 918 with the input noise 914. The diffusion model 902 is built such that during the reverse diffusion process, the diffusion model can start with a noisy input image and can determine the amount of noise that was introduced in the noisy input image. The diffusion model 902 generates predicted noise *n̂* 918. The predicted noise *n̂* 918 is subtracted from the noisy image 916 to generate a predicted deformation map 920.

Using the lower resolution and higher resolution CPB images, a correction mechanism may be applied. The correction mechanism is another way to perform the deformation correction to directly predict corrected images using a diffusion model. The lower resolution image and the higher resolution image may be used as inputs to a trained denoising diffusion model that has been trained on datasets of real images to remove noise. Alternatively, the diffusion model may be trained on CPB images, with CPB-specific noise, or fully trained from scratch on (possibly synthetic) CPB images. The diffusion model may also be trained on pairs of CPB images and corresponding GDS data, either via full pre-training or via fine-tuning on top of a foundation model, to better match the application space.

The higher resolution image, with the distortions due to charge in it, may be used as a "style" to guide the diffusion process to predict the deformation map that describes the measurement artifacts in the higher resolution image. The style may be used to control the image generation process while keeping the coarse structure of the lower resolution image intact. The core idea is to use a few images, such as synthetic images or images generated by quad scans, where the images include a lower resolution image, a higher resolution image with distortion, and a higher resolution image without distortion (from simulation, a quad scan, or some other method).

By fixing the pre-trained diffusion model weights, a style adapter model (e.g., implemented using a neural network such as neural network 500 of **Fig. 5**) may be trained. The style adapter model receives the distorted image as an input and outputs a vector that is added to the activation functions of the intermediate layers of the pre-trained diffusion model. The diffusion model's loss function is then trained to minimize the difference between the output of the diffusion model and the desired higher resolution image without distortion. In some embodiments, if the style adapter model is small, only a few higher resolution images without distortions are needed.

**Fig. 10** is a flow diagram of a process 1000 for correcting an image using a style adapter model, consistent with embodiments of the present disclosure. In some embodiments, the process 1000 may be performed by image processing system 250 of **Fig. 2****,** image processing system 390 of **Fig. 3****,** or server 400 of **Fig. 4****.**

An image of the structure 1002 to be generated is shown in **Fig. 10** for reference. A higher resolution image 1004 including distortions from charging is input to a style adapter model 1006. The style adapter model 1006 is trained to output a vector that is added to the activation functions of the intermediate layers of a diffusion model 1008. The diffusion model 1008 receives a lower resolution image 1010 as input and removes the noise from the lower resolution image 1010 to generate an output image 1012 in the style of the higher resolution image 1004.

In some embodiments, the process 1000 can use large pre-trained diffusion models (e.g., foundation models), trained on large datasets not related to CPB images, making it relatively cheap in terms of training. The style adapter model 1006 may be trained on a comparatively small dataset, meaning it is cheap in terms of training, and can be adapted to different images, process nodes, and materials.

**Fig. 11** is a flowchart of a method 1100 of correcting images taken by charged-particle beam (CPB) tool of a feature of a wafer, consistent with embodiments of the present disclosure. In some embodiments, the method 1100 may be performed by image processing system 250 of **Fig. 2****,** image processing system 390 of **Fig. 3****,** or server 400 of **Fig. 4****.**

At step 1102, a lower energy image of a feature may be obtained. For example, a lower energy CPB image of the feature may be obtained using a CPB tool as described in connection with **Fig. 6****.**

At step 1104, a higher energy image of the feature may be obtained. For example, a higher energy CPB image of the feature may be obtained using the CPB tool as described in connection with **Fig. 6****.** The higher energy CPB image includes distortions, such as distortions or charge artifacts caused by the higher energy settings of the CPB tool.

At step 1106, a mask may be calculated based on the lower energy image. For example, the mask may include the mask 608 as described in connection with **Fig. 6****.**

At step 1108, a distortion map may be generated by a machine learning model trained on the lower energy image, the higher energy image, and the mask. The distortion map indicates how the higher energy image is distorted relative to the feature. For example, the distortion map may be generated or fine-tuned based on process 800 of **Fig. 8** or process 900 of **Fig. 9****.**

At step 1110, a corrected higher energy image of the feature may be generated by applying the distortion map to the higher energy image. For example, the corrected higher energy image may be generated by process 600 of **Fig. 6****.**

At step 1112, metrology or defect detection may be performed using the corrected higher energy image of the feature. For example, the corrected higher energy image may be used to measure a critical dimension of the feature or detect a defect in the feature.

The manufacturing of ICs is performed layer-by-layer, where the patterns of one layer are produced over the previous layers. Metrology and inspections can be performed to guarantee the quality of the printed patterns. Inspections can include defect detection, such as if the layers are stacked as the intended design. If the layers are not stacked as intended, this may lead to edge placement error (EPE) and overlay (OV) errors between two consecutive layers. Using CPB images, metrology can be performed for the surface of each layer during the layer-by-layer manufacturing process. But using the CPB images measures the properties of only the top layer. Typically, to quantify the EPE, deeper layers through the stack are measured by using a high energy CPB tool, for example, a high-voltage scanning electron microscope (HV-SEM). However, the generated high energy images may mix the information content of the top layer with that of other deeper layers. To resolve each layer and to perform the metrology and inspection for each layer, it is necessary to separate the information contained in the high energy images to obtain correct information for each layer.

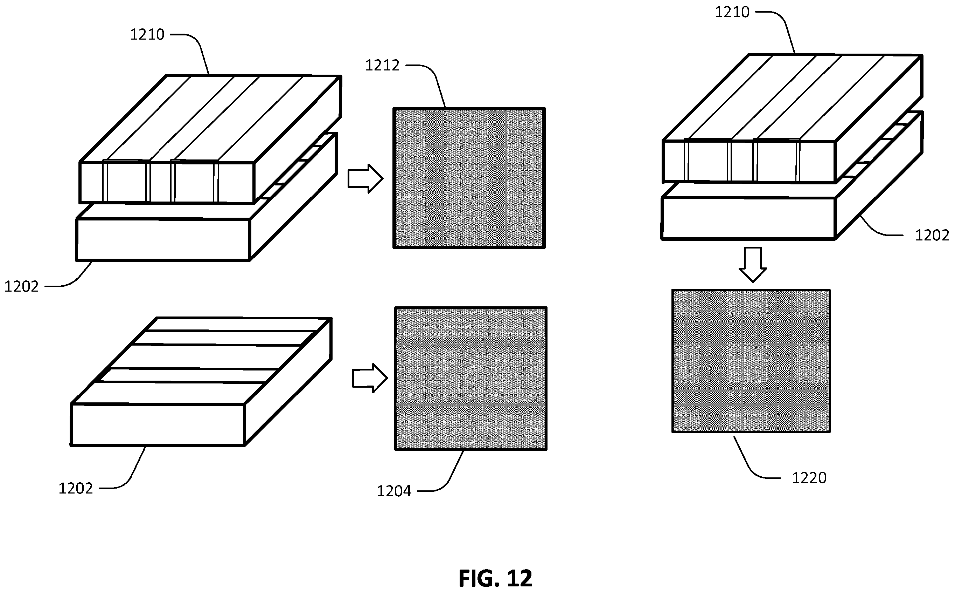

Embodiments of the present disclosure provide a machine learning model that is trained to disentangle high energy images of multilayer patterns printed on a wafer. **Fig. 12** shows examples of taking separate images of individual layers and taking a combined image of two consecutive layers, consistent with embodiments of the present disclosure.

A first layer (layer 1) 1202 of an IC is manufactured and a first CPB image 1204 of the first layer 1202 is taken. For example, the first image 1204 may be a lower energy CPB image of the first layer 1202. A second layer (layer 2) 1210 of the IC is manufactured on top of the first layer 1202 and a second CPB image 1212 of the second layer 1210 is taken. For example, the second image 1212 may be a lower energy CPB image of the second layer 1210. Then a higher energy CPB image 1220 is taken of both the first layer 1202 and the second layer 1210. As can be seen in higher energy CPB image 1220, features of both the first layer 1202 and the second layer 1210 are visible. Based on the higher energy CPB image 1220, it may not be possible to determine which layer the features in the image belong to.

The lower energy CPB images 1204, 1212 contain information of each layer, while the higher energy CPB image 1220 contains a mix of information from two or more layers (e.g., layers 1202, 1210). Additionally, different settings of the CPB tool can be used to gather information of the different layers to be used for training and during inference of the machine learning model. Depending on the CPB tool settings, the information mixing between the top layer and deeper layers may be different. This allows for a more diverse measurement that can improve the reconstruction of the image of each individual layer by the machine learning model.

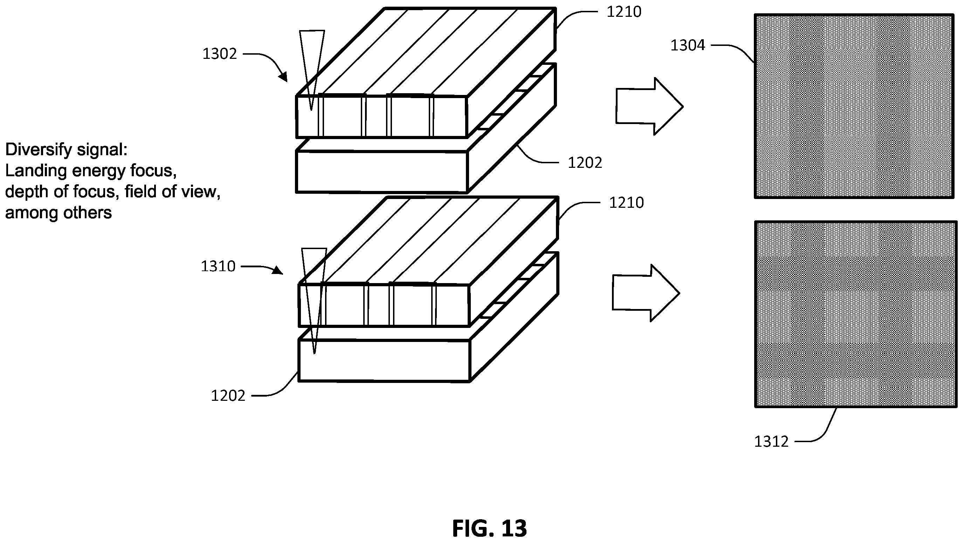

**Fig. 13** shows examples of different images that may be obtained by adjusting CPB tool settings, consistent with embodiments of the present disclosure. For example, features from different layers may become clearer in a higher energy CPB image by changing the CPB tool settings, such as landing energy, focus, or field of view.

At first CPB tool settings 1302, a first CPB image 1304 may be taken of layers 1202, 1210. For example, CPB tool settings 1302 set a focal point in the second layer 1210 and the first image 1304 shows features of the second layer 1210 while features of the first layer 1202 are not visible.

At second CPB tool settings 1310, a second CPB image 1312 may be taken of layers 1202, 1210. For example, CPB tool settings 1310 set a focal point in the first layer 1202 and the second image 1312 shows features of both the second layer 1210 and the first layer 1202. Based on the second image 1312, it cannot be readily determined which layer the features in the image belong to.

In some embodiments, a machine learning model may be trained to learn to identify and reconstruct the signals of each layer of an IC design. The model may be trained with simulated images or measured images (e.g., CPB images, such as lower energy CPB images or higher energy CPB images). For training the model, an image of each layer may be obtained by using lower energy CPB tool settings before the next layer is fabricated. After the next layer is fabricated, a second lower energy CPB image and a higher energy CPB image are obtained. To generate the predicted per-layer data, a generative model (e.g., a diffusion model) may be trained to model the full probability distribution of the possible per-layer images given the higher energy CPB image data. Given that the nature of the signal is incomplete in the higher energy CPB image data, there are multiple stack versions that could generate indistinguishable signals when observed by the higher energy CPB tool. In some embodiments, a deterministic model (e.g., a standard CNN) may also be used, but the quality of the predictions may be decreased relative to the generative model.

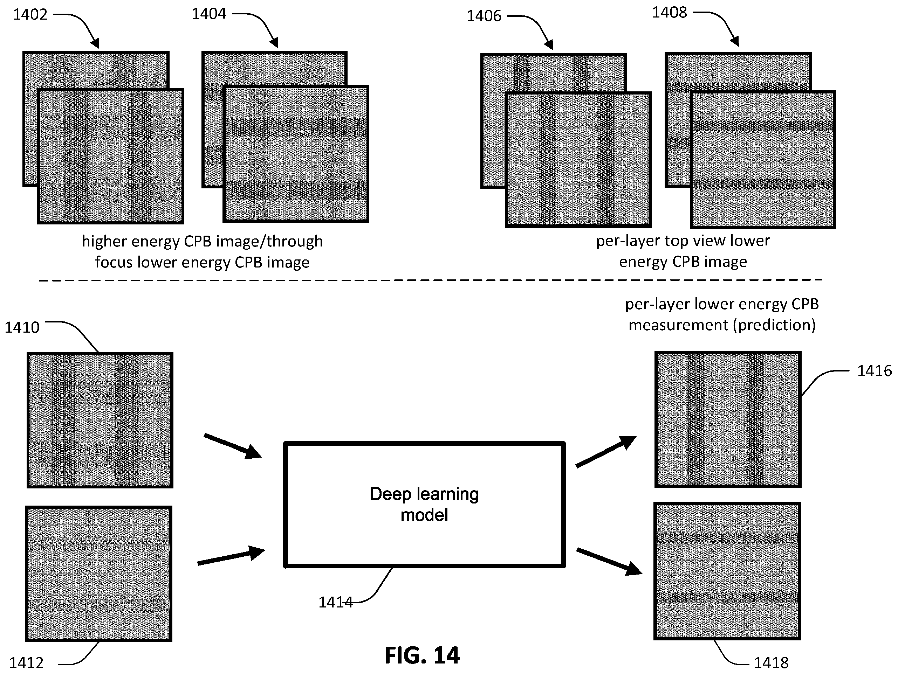

Using the lower energy CPB image of each layer and the corresponding higher energy CPB images, the machine learning model may be trained to map the higher energy CPB images to the corresponding lower energy CPB images. **Fig. 14** is an overview of a machine learning model for disentangling input images, consistent with embodiments of the present disclosure.

Sets of input images 1402, 1404, 1406, 1408 are measured and may be used as guidance for training the machine learning model. For example, sets 1402 and 1404 may include measured matching pairs of a higher energy CPB image and a through focus CPB image. The through focus CPB images are differently-blurred images based on changing the settings of the CPB tool, as described in connection with **Fig. 13****.** For example, by changing the focus setting of the CPB tool, the differently-blurred images may be obtained. Sets 1406 and 1408 may include measured matching pairs of per-layer lower energy CPB images. It is noted that while four sets of images 1402-1408 are shown in **Fig. 14****,** any number of sets of images may be used for training the machine learning model.

A first input image 1410 of a first layer and a second input image 1412 of a second layer may be provided as inputs to a machine learning model, e.g., deep learning model 1414. It is noted that the deep learning model 1414 may receive any number of images as inputs, including multiple images of each layer of an IC. The deep learning model 1414 is trained to predict images 1416, 1418 of each layer of the IC shown in the input images 1410, 1412. In some embodiments, the images 1416, 1418 may each be an image of a single layer. In other embodiments, the images 1416, 1418 may each be an image or two or more layers.

In some embodiments, the deep learning model 1414 may be a generative model, such as a diffusion model, to perform reconstruction of the images, permitting multiple probable images per layer to be generated.

**Fig. 15** is a flow diagram of a process 1500 for training a diffusion model to reconstruct a bottom layer from a higher energy CPB image, consistent with embodiments of the present disclosure. In some embodiments, the process 1500 may be performed by image processing system 250 of **Fig. 2****,** image processing system 390 of **Fig. 3****,** or server 400 of **Fig. 4****.**

An image 1502 of a bottom layer and noise 1504 are provided to a diffusion model 1506. The diffusion model 1506 is trained to remove the noise 1504 to attempt to recreate the bottom layer image 1502. To further assist in training the diffusion model 1506, a lower energy CPB image 1508 of the top layer, a higher energy CPB image 1510 targeted to measure the bottom layer, and conditioning parameters θ 1512 (e.g., guidance signals) may be provided. It is noted that more than one higher energy CPB image 1510 may be provided to condition the diffusion model 1506. In some embodiments, the conditioning parameters 1512 may be provided as a vector. In other embodiments, other types of data structures for representing the conditioning parameters 1512 may be used. The conditioning parameters 1512 may include information such as settings and general configuration information to describe the features in images 1508, 1510 because the images alone may not be sufficient to describe the features.

To train the diffusion model 1506, a different level of noise is added to the bottom layer image 1502 at each training sample. For each training iteration, a batch of data including multiple training samples is collected. Each training sample in the batch is a higher quality image combined with a random level of noise. The output of the diffusion model 1506 for the sample (e.g., predicted noise 1514) is the random level of noise added to the sample (e.g., noise 1504). The diffusion model 1506 is built such that during inference, the diffusion model can start with a noisy input image and can determine the amount of noise that was introduced in the noisy input image. The predicted noise 1514 may be subtracted from a noisy input image 1516 (a combination of the bottom layer 1502 and the input noise 1504) to obtain a higher quality image as the end result (e.g., predicted image 1518).

The diffusion model 1506 may repeat the training process 1500 until a convergence criteria is met. For example, the convergence criteria may be met if a difference between successively predicted images 1518 is lower than a first threshold. As another example, the convergence criteria may be met if a difference between the predicted image 1518 and the bottom layer image 1502 is lower than a second threshold.

**Fig. 16** is a flow diagram of a process 1600 for training a diffusion model to reconstruct a bottom layer and a top layer from a higher energy CPB image, consistent with embodiments of the present disclosure. In some embodiments, the process 1600 may be performed by image processing system 250 of **Fig. 2****,** image processing system 390 of **Fig. 3****,** or server 400 of **Fig. 4****.**

Images 1602 of a bottom layer and a top layer and noise 1604 are provided to a diffusion model 1606. The diffusion model 1606 is trained to remove the noise 1604 to attempt to recreate the bottom layer and top layer images 1602. While shown in **Fig. 16** together as images 1602, the diffusion model 1606 works on the bottom layer and the top layer independently to separately generate images of the bottom layer and the top layer. To further assist in training the diffusion model 1606, a higher energy CPB image 1608 targeted to measure the bottom layer and the top layer and conditioning parameters θ 1610 (e.g., guidance signals) may be provided. It is noted that more than one higher energy CPB image 1608 may be provided to condition the diffusion model 1606. In some embodiments, the conditioning parameters 1610 may be provided as a vector. In other embodiments, other types of data structures for representing the conditioning parameters 1610 may be used. The conditioning parameters 1610 may include information such as settings and general configuration information to describe the features in image 1608 because the images alone may not be sufficient to describe the features.

To train the diffusion model 1606, a different level of noise is added to the bottom layer and top layer images 1602 at each training sample. For each training iteration, a batch of data including multiple training samples is collected. Each training sample in the batch is a higher quality image combined with a random level of noise. The output of the diffusion model 1606 for the sample (e.g., predicted noise 1612) is the random level of noise added to the sample (e.g., noise 1604). The diffusion model 1606 is built such that during inference, the diffusion model can start with a noisy input image and can determine the amount of noise that was introduced in the noisy input image. The predicted noise 1612 may be subtracted from noisy input images 1614 (a combination of the bottom layer image 1602 and the input noise 1604, and a combination of the top layer image 1602 and the noise 1604) to obtain higher quality images as the end result (e.g., predicted images 1616).

The diffusion model 1606 may repeat the training process 1600 until a convergence criteria is met. For example, the convergence criteria may be met if a difference between successively predicted images 1616 is lower than a first threshold. As another example, the convergence criteria may be met if a difference between the predicted images 1616 and the bottom layer and top layer images 1602 is lower than a second threshold.

Other parameters of the sample may be included in the modeling process. For example, the material composition of the different layers may play a role when interacting with the e-beam. The material composition may be input to the generative model and trained to consider possible changes in the CPB signal with the material. In some embodiments, the model may be trained to predict the material composition of the layer that the model is trained to reconstruct.

**Fig. 17** is a flow diagram of a process 1700 for training a diffusion model to reconstruct a bottom layer from a higher energy CPB image and considering bottom layer materials, consistent with embodiments of the present disclosure. In some embodiments, the process 1700 may be performed by image processing system 250 of **Fig. 2****,** image processing system 390 of **Fig. 3****,** or server 400 of **Fig. 4****.**

An image 1702 of a bottom layer and noise 1704 are provided to a diffusion model 1706. The diffusion model 1706 is trained to remove the noise 1704 to attempt to recreate the bottom layer image 1702. To further assist in training the diffusion model 1706, a materials map 1708 for the bottom layer, a lower energy CPB image 1710 of the top layer, a higher energy CPB image 1712 targeted to measure the bottom layer, and conditioning parameters θ 1714 (e.g., guidance signals) may be provided. It is noted that more than one higher energy CPB image 1712 may be provided to condition the diffusion model 1706. In some embodiments, the conditioning parameters 1714 may be provided as a vector. In other embodiments, other types of data structures for representing the conditioning parameters 1714 may be used. The conditioning parameters 1714 may include information such as settings and general configuration information to describe the features in the materials map 1708 and the images 1710, 1712 because the materials map 1708 and the images 1710, 1712 alone may not be sufficient to describe the features.

To train the diffusion model 1706, a different level of noise is added to the bottom layer image 1702 at each training sample. For each training iteration, a batch of data including multiple training samples is collected. Each training sample in the batch is a higher quality image combined with a random level of noise. The output of the diffusion model 1706 for the sample (e.g., predicted noise 1716) is the random level of noise added to the sample (e.g., noise 1704). The diffusion model 1706 is built such that during inference, the diffusion model can start with a noisy input image and can determine the amount of noise that was introduced in the noisy input image. The predicted noise 1716 may be subtracted from a noisy input image 1718 (a combination of the bottom layer 1702 and the input noise 1704) to obtain a higher quality image as the end result (e.g., predicted image 1720).

The diffusion model 1706 may repeat the training process 1700 until a convergence criteria is met. For example, the convergence criteria may be met if a difference between successively predicted images 1720 is lower than a first threshold. As another example, the convergence criteria may be met if a difference between the predicted image 1720 and the bottom layer image 1702 is lower than a second threshold.

In some embodiments, each layer of the wafer may be measured prior to patterning the layer. This permits additional data collection about the materials used to manufacture the layer. This may be an expensive additional step, in terms of the time required to add this step to the process, and the precision required to properly align the images. However, because this additional step is part of the diffusion model training process, the additional time and cost may be warranted because the trained diffusion model may then be used in the normal production flow to speed up processing per wafer. The trained diffusion model may be used for metrology purposes, for example, to measure overlay and EPE in one step. Because the diffusion model provides probability measures, it is possible to obtain statistics on overlay and EPE measurements.

**Fig. 18** is a flowchart of a method 1800 of generating a single layer image from a charged-particle beam (CPB) image of a multilayer pattern of a wafer and using the single layer image for metrology or defect detection, consistent with embodiments of the present disclosure. In some embodiments, the method 1800 may be performed by image processing system 250 of **Fig. 2****,** image processing system 390 of **Fig. 3****,** or server 400 of **Fig. 4****.**

At step 1802, a first lower energy image of a first layer of the wafer may be obtained before a second layer of the wafer is fabricated on top of the first layer. For example, a lower energy CPB image of the feature may be obtained using a CPB tool as described in connection with **Fig. 6****.**

At step 1804, a second lower energy image of the second layer may be obtained after the second layer is fabricated. For example, the second lower energy image may include a lower energy CPB image obtained in a similar manner as the first lower energy image.

At step 1806, a higher energy image of at least the first layer and the second layer may be obtained. For example, a higher energy CPB image of the feature may be obtained using the CPB tool as described in connection with **Fig. 6****.**

At step 1808, a new first layer image and a new second layer image may be generated using a machine learning model trained on the first lower energy image, the second lower energy image, and the higher energy image. For example, the new first layer image and the new second layer image may be generated based on process 1500 of **Fig. 15****,** process 1600 of **Fig. 16****,** or process 1700 of **Fig. 17****.**

At step 1810, metrology or defect detection using the new first layer image or the new second layer image may be performed. For example, the new first layer image or the new second layer image may be used to measure overlay or EPE between the first layer and the second layer.

A non-transitory computer readable medium may be provided that stores instructions for a processor of a controller (e.g., controller 109 of **Fig. 1**) or a processor of a server (e.g., server 400 of **Fig. 4**) to carry out, among other things, image inspection, image acquisition, stage positioning, beam focusing, electric field adjustment, beam bending, condenser lens adjusting, activating charged particle source, beam deflecting, and operations 600, 700, 750, 800, 900, 1000, 1500, 1600, and 1700 and methods 1100 and 1800. Common forms of non-transitory media include, for example, a floppy disk, a flexible disk, hard disk, solid state drive, magnetic tape, or any other magnetic data storage medium, a Compact Disc Read Only Memory (CD-ROM), any other optical data storage medium, any physical medium with patterns of holes, a Random Access Memory (RAM), a Programmable Read Only Memory (PROM), and Erasable Programmable Read Only Memory (EPROM), a FLASH-EPROM or any other flash memory, Non-Volatile Random Access Memory (NVRAM), a cache, a register, any other memory chip or cartridge, and networked versions of the same.

The embodiments may further be described using the following clauses:
1. A method of updating images taken by charged-particle beam (CPB) tool of a feature of a wafer, the method including:
   generating a distortion map by a machine learning model trained on:
      a first CPB image of the feature, wherein the first image has a first resolution;
      a second CPB image of the feature, wherein the second image has a second resolution different from the first resolution and the second CPB image includes distortions; and
      a mask based on the first CPB image,
      wherein the distortion map indicates how the second CPB image is distorted relative to the feature; and
   generating a third image of the feature by applying the distortion map to the second CPB image, wherein the third image has a third resolution higher than the first resolution and is used for performing metrology or defect detection.
2. The method of clause 1, wherein the third resolution is the same resolution as the second resolution.
3. The method of clauses 1 or 2, wherein the second resolution is a lower resolution than the first resolution.
4. The method of clauses 1 or 2, wherein the second resolution is a higher resolution than the first resolution.
5. The method of any one of clauses 1-4, wherein the CPB tool is a scanning electron microscope.
6. The method of any one of clauses 1-5, wherein the machine learning model is a diffusion model.
7. The method of any one of clauses 1-6, wherein the machine learning model uses the first CPB image to guide the generating of the third image.
8. The method of clause 7, wherein the machine learning model uses a mask related to the first CPB image to guide the generating of the third image on a condition that the first CPB image is not fully measured.
9. The method of any one of clauses 1-8, wherein the machine learning model includes a style transfer model trained on the second CPB image whereby the third image is generated in a same style as the second CPB image.
10. The method of any one of clauses 1-9, further including:
   generating a synthetically deformed image by the machine learning model, the synthetically deformed image based on the second CPB image and the deformation map.
11. The method of any one of clauses 1-10, wherein the machine learning model includes a style transfer model trained on the second CPB image and the method further includes:
   generating a new synthetically deformed image in a same style as the second CPB image, wherein the style and information content of the second CPB image is retained while relying on the first CPB image to correct deformations.
12. The method of any one of clauses 1-11, wherein the machine learning model is further trained on Graphic Design System (GDS) data.
13. The method of clause 12, wherein the GDS data corresponds to the first CPB image.
14. The method of clause 12, wherein the GDS data corresponds to the second CPB image.
15. The method of clause 12, wherein the GDS data corresponds to the first CPB image and the second CPB image.
16. A non-transitory computer readable medium that stores a set of instructions that is executable by at least one processor of a computing device to cause the computing device to perform operations for updating images taken by charged-particle beam (CPB) tool of a feature of a wafer, the operations including:
   generating a distortion map by a machine learning model trained on:
      a first CPB image of the feature, wherein the first image has a first resolution;
      a second CPB image of the feature, wherein the second image has a second resolution different from the first resolution and the second CPB image includes distortions; and
      a mask based on the first CPB image,
      wherein the distortion map indicates how the second CPB image is distorted relative to the feature; and
   generating a third image of the feature by applying the distortion map to the second CPB image, wherein the third image has a third resolution higher than the first resolution and is used for performing metrology or defect detection.
17. The non-transitory computer readable medium of clause 16, wherein the third resolution is the same resolution as the second resolution.
18. The non-transitory computer readable medium of clauses 16 or 17, wherein the second resolution is a lower resolution than the first resolution.
19. The non-transitory computer readable medium of clauses 16 or 17, wherein the second resolution is a higher resolution than the first resolution.
20. The non-transitory computer readable medium of any one of clauses 16-19, wherein the CPB tool is a scanning electron microscope.
21. The non-transitory computer readable medium of any one of clauses 16-20, wherein the machine learning model is a diffusion model.
22. The non-transitory computer readable medium of any one of clauses 16-21, wherein the machine learning model uses the first CPB image to guide the generating of the third image.
23. The non-transitory computer readable medium of clause 22, wherein the machine learning model uses a mask related to the first CPB image to guide the generating of the third image on a condition that the first CPB image is not fully measured.
24. The non-transitory computer readable medium of any one of clauses 16-23, wherein the machine learning model includes a style transfer model trained on the second CPB image whereby the third image is generated in a same style as the second CPB image.
25. The non-transitory computer readable medium of any one of clauses 16-24, wherein the operations further include:
   generating a synthetically deformed image by the machine learning model, the synthetically deformed image based on the second CPB image and the deformation map.
26. The non-transitory computer readable medium of any one of clauses 16-25, wherein the machine learning model includes a style transfer model trained on the second CPB image and the operations further include:
   generating a new synthetically deformed image in a same style as the second CPB image, wherein the style and information content of the second CPB image is retained while relying on the first CPB image to correct deformations.
27. The non-transitory computer readable medium of any one of clauses 16-26, wherein the machine learning model is further trained on Graphic Design System (GDS) data.
28. The non-transitory computer readable medium of clause 27, wherein the GDS data corresponds to the first CPB image.
29. The non-transitory computer readable medium of clause 27, wherein the GDS data corresponds to the second CPB image.
30. The non-transitory computer readable medium of clause 27, wherein the GDS data corresponds to the first CPB image and the second CPB image.
31. An apparatus for updating images taken by charged-particle beam (CPB) tool of a feature of a wafer, including:
   a memory storing a set of instructions; and
   at least one processor configured to execute the set of instructions to cause the apparatus to perform operations including:
      generating a distortion map by a machine learning model trained on:
         a first CPB image of the feature, wherein the first image has a first resolution;
         a second CPB image of the feature, wherein the second image has a second resolution different from the first resolution and the second CPB image includes distortions; and
         a mask based on the first CPB image,
         wherein the distortion map indicates how the second CPB image is distorted relative to the feature; and
      generating a third image of the feature by applying the distortion map to the second CPB image, wherein the third image has a third resolution higher than the first resolution and is used for performing metrology or defect detection.
32. The apparatus of clause 31, wherein the third resolution is the same resolution as the second resolution.
33. The apparatus of clauses 31 or 32, wherein the second resolution is a lower resolution than the first resolution.
34. The apparatus of clauses 31 or 32, wherein the second resolution is a higher resolution than the first resolution.
35. The apparatus of any one of clauses 31-34, wherein the CPB tool is a scanning electron microscope.
36. The apparatus of any one of clauses 31-35, wherein the machine learning model is a diffusion model.
37. The apparatus of any one of clauses 31-36, wherein the machine learning model uses the first CPB image to guide the generating of the third image.
38. The apparatus of clause 37, wherein the machine learning model uses a mask related to the first CPB image to guide the generating of the third image on a condition that the first CPB image is not fully measured.
39. The apparatus of any one of clauses 31-38, wherein the machine learning model includes a style transfer model trained on the second CPB image whereby the third image is generated in a same style as the second CPB image.
40. The apparatus of any one of clauses 31-39, wherein the operations further include:
   generating a synthetically deformed image by the machine learning model, the synthetically deformed image based on the second CPB image and the deformation map.
41. The apparatus of any one of clauses 31-40, wherein the machine learning model includes a style transfer model trained on the second CPB image and the operations further include:
   generating a new synthetically deformed image in a same style as the second CPB image, wherein the style and information content of the second CPB image is retained while relying on the first CPB image to correct deformations.
42. The apparatus of any one of clauses 31-41, wherein the machine learning model is further trained on Graphic Design System (GDS) data.
43. The apparatus of clause 42, wherein the GDS data corresponds to the first CPB image.
44. The apparatus of clause 42, wherein the GDS data corresponds to the second CPB image.
45. The apparatus of clause 42, wherein the GDS data corresponds to the first CPB image and the second CPB image.
46. A method of generating a single layer image from a charged-particle beam (CPB) image of a multilayer pattern of a wafer, including:
   generating a new first layer image and a new second layer image using a machine learning model trained on:
      a first CPB image of a first layer of the wafer before a second layer of the wafer is fabricated on top of the first layer, wherein the first image has a first resolution;
      a second CPB image of the second layer after the second layer is fabricated, wherein the second image has the first resolution; and
      a third CPB image of at least the first layer and the second layer, wherein the third image has a second resolution different from the first resolution,
   wherein the new first layer image is used for performing metrology or defect detection.
47. The method of clause 46, wherein the third CPB image includes features of the first layer and features of the second layer.
48. The method of clauses 46 or 47, wherein the second resolution is a lower resolution than the first resolution.
49. The method of clauses 46 or 47, wherein the second resolution is a higher resolution than the first resolution.
50. The method of any one of clauses 46-49, wherein the machine learning model is a diffusion model.
51. The method of any one of clauses 46-50, wherein the machine learning model is additionally trained using conditioning parameters.
52. The method of clause 51, wherein the conditioning parameters include settings and configuration information to describe features in the second CPB image and the third CPB image.
53. The method of clauses 51 or 52, wherein the conditioning parameters include a materials map indicating materials used to fabricate the first layer.
54. The method of clause 53, wherein the materials map further indicates materials used to fabricate the second layer.
55. The method of any one of clauses 46-54, wherein the machine learning model is further trained on Graphic Design System (GDS) data.
56. The method of clause 55, wherein the GDS data corresponds to the first CPB image.
57. The method of clause 55, wherein the GDS data corresponds to the second CPB image.
58. The method of clause 55, wherein the GDS data corresponds to the first CPB image and the second CPB image.
59. A non-transitory computer readable medium that stores a set of instructions that is executable by at least one processor of a computing device to cause the computing device to perform operations for generating a single layer image from a charged-particle beam (CPB) image of a multilayer pattern of a wafer, the operations including:
   generating a new first layer image and a new second layer image using a machine learning model trained on:
      a first CPB image of a first layer of the wafer before a second layer of the wafer is fabricated on top of the first layer, wherein the first image has a first resolution;
      a second CPB image of the second layer after the second layer is fabricated, wherein the second image has the first resolution; and
      a third CPB image of at least the first layer and the second layer, wherein the third image has a second resolution different from the first resolution,
   wherein the new first layer image is used for performing metrology or defect detection.
60. The non-transitory computer readable medium of clause 59, wherein the third CPB image includes features of the first layer and features of the second layer.
61. The non-transitory computer readable medium of clauses 59 or 60, wherein the second resolution is a lower resolution than the first resolution.
62. The non-transitory computer readable medium of clauses 59 or 60, wherein the second resolution is a higher resolution than the first resolution.
63. The non-transitory computer readable medium of any one of clauses 59-62, wherein the machine learning model is a diffusion model.
64. The non-transitory computer readable medium of any one of clauses 59-63, wherein the machine learning model is additionally trained using conditioning parameters.
65. The non-transitory computer readable medium of clause 64, wherein the conditioning parameters include settings and configuration information to describe features in the second CPB image and the third CPB image.
66. The non-transitory computer readable medium of clauses 64 or 65, wherein the conditioning parameters include a materials map indicating materials used to fabricate the first layer.
67. The non-transitory computer readable medium of clause 66, wherein the materials map further indicates materials used to fabricate the second layer.
68. The non-transitory computer readable medium of any one of clauses 59-67, wherein the machine learning model is further trained on Graphic Design System (GDS) data.
69. The non-transitory computer readable medium of clause 68, wherein the GDS data corresponds to the first CPB image.
70. The non-transitory computer readable medium of clause 68, wherein the GDS data corresponds to the second CPB image.
71. The non-transitory computer readable medium of clause 68, wherein the GDS data corresponds to the first CPB image and the second CPB image.
72. An apparatus for generating a single layer image from a charged-particle beam (CPB) image of a multilayer pattern of a wafer, including:
   a memory storing a set of instructions; and
   at least one processor configured to execute the set of instructions to cause the apparatus to perform operations including:
      generating a new first layer image and a new second layer image using a machine learning model trained on:
         a first CPB image of a first layer of the wafer before a second layer of the wafer is fabricated on top of the first layer, wherein the first image has a first resolution;
         a second CPB image of the second layer after the second layer is fabricated, wherein the second image has the first resolution; and
         a third CPB image of at least the first layer and the second layer, wherein the third image has a second resolution different from the first resolution,
      wherein the new first layer image is used for performing metrology or defect detection.
73. The apparatus of clause 72, wherein the third CPB image includes features of the first layer and features of the second layer.
74. The apparatus of clauses 72 or 73, wherein the second resolution is a lower resolution than the first resolution.
75. The apparatus of clauses 72 or 73, wherein the second resolution is a higher resolution than the first resolution.
76. The apparatus of any one of clauses 72-75, wherein the machine learning model is a diffusion model.
77. The apparatus of any one of clauses 72-76, wherein the machine learning model is additionally trained using conditioning parameters.
78. The apparatus of clause 77, wherein the conditioning parameters include settings and configuration information to describe features in the second CPB image and the third CPB image.
79. The apparatus of clauses 77 or 78, wherein the conditioning parameters include a materials map indicating materials used to fabricate the first layer.
80. The apparatus of clause 79, wherein the materials map further indicates materials used to fabricate the second layer.
81. The apparatus of any one of clauses 72-80, wherein the machine learning model is further trained on Graphic Design System (GDS) data.
82. The apparatus of clause 81, wherein the GDS data corresponds to the first CPB image.
83. The apparatus of clause 81, wherein the GDS data corresponds to the second CPB image.
84. The apparatus of clause 81, wherein the GDS data corresponds to the first CPB image and the second CPB image.

Block diagrams in the figures may illustrate the architecture, functionality, and operation of possible implementations of systems, methods, and computer hardware or software products according to various exemplary embodiments of the present disclosure. In some embodiments, a non-transitory computer-readable medium is provided and can include instructions to perform the functions described in connection with any one or more of **Figs. 6-18****.** In this regard, each block in a schematic diagram may represent certain arithmetical or logical operation processing that may be implemented using hardware such as an electronic circuit. Blocks may also represent a module, segment, or portion of code that comprises one or more executable instructions for implementing the specified logical functions. It should be understood that in some alternative implementations, functions indicated in a block may occur out of the order noted in the figures. For example, two blocks shown in succession may be executed or implemented substantially concurrently, or two blocks may sometimes be executed in reverse order, depending upon the functionality involved. Some blocks may also be omitted. It should also be understood that each block of the block diagrams, and combination of the blocks, may be implemented by special purpose hardware-based systems that perform the specified functions or acts, or by combinations of special purpose hardware and computer instructions.

It will be appreciated that the embodiments of the present disclosure are not limited to the exact construction that has been described above and illustrated in the accompanying drawings, and that various modifications and changes may be made without departing from the scope thereof. The present disclosure has been described in connection with various embodiments, and other embodiments will be apparent to those skilled in the art from consideration of the specification and practice of the technology disclosed herein. It is intended that the specification and examples be considered as exemplary only, with a true scope of the invention being indicated by the following claims.

## Claims

1. A method of updating images taken by charged-particle beam (CPB) tool of a feature of a wafer, the method comprising:
generating a distortion map by a machine learning model trained on:
a first CPB image of the feature, wherein the first image has a first resolution;
a second CPB image of the feature, wherein the second image has a second resolution different from the first resolution and the second CPB image includes distortions; and
a mask based on the first CPB image,
wherein the distortion map indicates how the second CPB image is distorted relative to the feature; and
generating a third image of the feature by applying the distortion map to the second CPB image, wherein the third image has a third resolution higher than the first resolution and is used for performing metrology or defect detection.

2. The method of claim 1, wherein the CPB tool is a scanning electron microscope.

3. The method of claim 1, wherein the machine learning model is a diffusion model.

4. The method of claim 1, wherein the machine learning model uses the first CPB image to guide the generating of the third image.

5. The method of claim 4, wherein the machine learning model uses a mask related to the first CPB image to guide the generating of the third image on a condition that the first CPB image is not fully measured.

6. The method of claim 1, wherein the machine learning model includes a style transfer model trained on the second CPB image whereby the third image is generated in a same style as the second CPB image.

7. The method of claim 1, further comprising:
generating a synthetically deformed image by the machine learning model, the synthetically deformed image based on the second CPB image and the deformation map.

8. The method of claim 1, wherein the machine learning model includes a style transfer model trained on the second CPB image and the method further comprises:
generating a new synthetically deformed image in a same style as the second CPB image,
wherein the style and information content of the second CPB image is retained while relying on the first CPB image to correct deformations.

9. A non-transitory computer readable medium that stores a set of instructions that is executable by at least one processor of a computing device to cause the computing device to perform operations for updating images taken by charged-particle beam (CPB) tool of a feature of a wafer, the operations comprising:
generating a distortion map by a machine learning model trained on:
a first CPB image of the feature, wherein the first image has a first resolution;
a second CPB image of the feature, wherein the second image has a second resolution different from the first resolution and the second CPB image includes distortions; and
a mask based on the first CPB image,
wherein the distortion map indicates how the second CPB image is distorted relative to the feature; and
generating a third image of the feature by applying the distortion map to the second CPB image, wherein the third image has a third resolution higher than the first resolution and is used for performing metrology or defect detection.

10. The non-transitory computer readable medium of claim 9, wherein the machine learning model uses the first CPB image to guide the generating of the third image.

11. The non-transitory computer readable medium of claim 10, wherein the machine learning model uses a mask related to the first CPB image to guide the generating of the third image on a condition that the first CPB image is not fully measured.

12. The non-transitory computer readable medium of claim 9, wherein the machine learning model includes a style transfer model trained on the second CPB image whereby the third image is generated in a same style as the second CPB image.

13. The non-transitory computer readable medium of claim 9, wherein the machine learning model includes a style transfer model trained on the second CPB image and the operations further comprise:
generating a new synthetically deformed image in a same style as the second CPB image,
wherein the style and information content of the second CPB image is retained while relying on the first CPB image to correct deformations.

14. An apparatus for updating images taken by charged-particle beam (CPB) tool of a feature of a wafer, comprising:
a memory storing a set of instructions; and
at least one processor configured to execute the set of instructions to cause the apparatus to perform operations comprising:
generating a distortion map by a machine learning model trained on:
a first CPB image of the feature, wherein the first image has a first resolution;
a second CPB image of the feature, wherein the second image has a second resolution different from the first resolution and the second CPB image includes distortions; and
a mask based on the first CPB image,
wherein the distortion map indicates how the second CPB image is distorted relative to the feature; and
generating a third image of the feature by applying the distortion map to the second CPB image, wherein the third image has a third resolution higher than the first resolution and is used for performing metrology or defect detection.

15. The apparatus of claim 14, wherein the machine learning model includes a style transfer model trained on the second CPB image whereby the third image is generated in a same style as the second CPB image.
